# EUROPEAN PATENT APPLICATION

(11) **EP 4 471 585 A1**
(43) Date of publication of application: **04.12.2024**
(21) Application number: 23773749.9
(22) Date of filing: 17.03.2023
(51) Int. Cl.: G06F 9/451

(54) **INTERFACE DISPLAY METHOD AND ELECTRONIC DEVICE**

(30) Priority: 23.03.2022 CN 202210286344
(71) Applicant: Huawei Technologies Co., Ltd., Shenzhen, Guangdong 518129 (CN)
(72) Inventor: LI, Chundong, Shenzhen, Guangdong 518129 (CN); LIU, Fengkai, Shenzhen, Guangdong 518129 (CN); MIAO, Yutong, Shenzhen, Guangdong 518129 (CN); HU, Xue, Shenzhen, Guangdong 518129 (CN)
(74) Representative: Pfenning, Meinig & Partner mbB
(86) International application number: PCT/CN2023/082310
(87) International publication number: WO 2023/179501

(57) **Abstract**

Embodiments of this application provide an interface display method and an electronic device. In the method, the electronic device generates, based on a first display window with a width less than a width of an actual display window, a first user interface corresponding to a view tree of a target application. The electronic device stretches the first user interface and a control on the first user interface based on a width of a second display window, to obtain a second user interface. The electronic device restores at least one control on the second user interface, so that deformation of some controls on the user interface is avoided while the second user interface adapts to the width of the second display window. The electronic device displays the second user interface on the second display window, so that a user interface of an application is adaptive at a system level, and this is applicable to any application. According to this application, a quantity of controls included in the displayed user interface is a quantity of controls to be displayed by the application. The displayed user interface can adapt to a screen with a large aspect ratio, without reducing the quantity of displayed controls.

## Description

This application claims priority to Chinese Patent Application No. 202210286344.8, filed with the China National Intellectual Property Administration on March 23, 2022 and entitled "INTERFACE DISPLAY METHOD AND ELECTRONIC DEVICE", which is incorporated herein by reference in its entirety.

### TECHNICAL FIELD

Embodiments of this application relate to the field of terminal devices, and in particular, to an interface display method and an electronic device.

### BACKGROUND

With development of technologies of foldable screens, an increasing number of users choose to use foldable mobile phones. However, currently, when performing layout on a window, a third-party application usually performs layout based on a screen ratio of a bar-type mobile phone. Therefore, when the screen ratio of the bar-type mobile phone differs greatly from that of a foldable mobile phone, a window layout of the third-party application cannot adapt to a screen of the foldable mobile phone. This degrades user experience.

### SUMMARY

Embodiments of this application provide an interface display method and an electronic device. In the method, the electronic device may display a user interface of an application without reducing interface content to be displayed by the application, to improve user experience.

According to a first aspect, an embodiment of this application provides an interface display method. The method includes: An electronic device obtains a first user interface based on a first display window and a view tree of a target application. A width of the first user interface is the same as a width of the first display window. A height of the first user interface is the same as a height of the first display window. The view tree of the target application includes at least one view node. The first user interface includes a control corresponding to each of the at least one view node. The electronic device stretches the first user interface and a width of each control on the first user interface to obtain a second user interface. A height of each control on the second user interface is equal to a height of each control on the first user interface. The electronic device restores a width of at least one control on the second user interface to be the same as a width on the first user interface. The electronic device displays the second user interface on a second display window. A width of the second user interface is equal to a width of the second display window. A height of the second user interface is equal to a height of the second display window. The height of the second display window is equal to the height of the first display window. The width of the second display window is greater than the width of the first display window. In this way, in this embodiment of this application, a user interface of an application is adaptive at a system level, and this is applicable to any application, without modifying the application. In addition, in this embodiment of this application, a user interface obtained by stretching an interface does not reduce content on a user interface to be displayed by the application.

For example, the first display window may be a display window 901 in an embodiment of this application.

For example, the second display window may be a display window 902 in an embodiment of this application.

For example, that the electronic device restores a width of at least one control to be the same as a width on the first user interface may be understood as restoring the width of the at least one control to an unstretched width.

For example, a distance between the control on the second user interface and an upper edge of the second user interface is equal to a distance between the control and an upper edge of the first user interface when the control is on the first user interface. A distance between the control on the second user interface and a lower edge of the second user interface is equal to a distance between the control and a lower edge of the first user interface when the control is on the first user interface.

For example, heights of each display window and space are optionally pixel values in a vertical direction. Widths of the display window and the space are optionally pixel values in a horizontal direction.

For example, the view tree is a ViewTree described in an embodiment of this application.

For example, the view node includes a View and/or a ViewGroup.

According to the first aspect, before the electronic device obtains the first user interface based on the first display window and the view tree of the target application, the method further includes: The electronic device obtains the view tree generated by the target application. The view tree is generated by the target application based on window information transmitted by the electronic device to the target application, and the window information indicates the width and the height of the first display window. In this way, the electronic device provides information about the first display window for the application. The application may generate the view tree based on the height and the width of the first display window. In this way, a requirement on the application is reduced, and the application does not need to modify the view tree.

For example, the method may further include: A layout system in the electronic device transmits the window information to the application, and receives the view tree generated by the application.

For example, the window information indicates only the width and the height of the first display window, but does not indicate a location of the first display window.

According to any one of the first aspect or the implementations of the first aspect, that an electronic device obtains a first user interface based on a first display window and a view tree of a target application includes: The electronic device obtains layout information of each of the at least one view node. The layout information indicates a size and a location of each view node on the first display window. The electronic device generates the first user interface based on the layout information of each view node. In this way, in a layout phase, the electronic device may perform layout based on the first display window, to obtain the first user interface. The first user interface obtained through layout conforms to the size of the first display window, and a location of each control is also on the first display window. The first user interface obtained by performing layout based on the first display window is close to a display interface of a bar-type mobile phone.

For example, the layout information indicates a location of the view node in a parent node of the view node, and the location may alternatively be understood as the location on the first display window. For example, the location of the view node includes distances between the view node and the left, right, upper, and lower edges of the parent node.

For example, each view node may be considered as a rectangle.

According to any one of the first aspect or the implementations of the first aspect, that the electronic device generates the first user interface based on the layout information of each view node includes: The electronic device creates a canvas for each view node based on the layout information of each view node, and draws, on the canvas corresponding to each view node, control content corresponding to each view node to obtain the first user interface. A height of a canvas corresponding to a root view node of the view node is the height of the first user interface, and a width of the canvas corresponding to the root view node is the width of the first user interface. In this way, in this embodiment of this application, the canvas of the node is stretched, to implement a stretching operation on the control on the user interface.

For example, a control displayed on the user interface may be understood as the control corresponding to the view node. It should be noted that, the control content displayed on the user interface is only a part of the control content, and the control content may include an undisplayed part, in other words, a part that is of the canvas and that is not padded with an image. On the display interface, the user may not see a part other than the control content in the canvas. However, the undisplayed part is also a part of the control, and may alternatively be understood as a part of the control corresponding to the view node.

According to any one of the first aspect or the implementations of the first aspect, that the electronic device stretches the first user interface and a width of each control on the first user interface to obtain a second user interface includes: The electronic device stretches a width of a canvas of the at least one view node to obtain the second user interface. Control content in the canvas of the at least one view node is stretched as the canvas is stretched. In this way, in this embodiment of this application, the canvas is stretched, to stretch the control. In this embodiment of this application, only the canvas corresponding to each view node is changed, but an actual location of the control is not changed. The actual location is a location of the control on the first display window. It may be understood that, in this embodiment of this application, only content presented by each control on the display window is changed, but in the layout phase, an actual location of each control on the display window is not changed. This reduces system processing complexity.

According to any one of the first aspect or the implementations of the first aspect, the view tree includes the root view node and a plurality of child view nodes. That the electronic device restores a width of at least one control on the second user interface to be the same as a width on the first user interface includes: The electronic device restores a width of a canvas corresponding to at least one child view node on the second user interface to an unstretched width. The at least one child view node belongs to the plurality of child view nodes. In this way, after the canvas of the control is stretched, canvases of some controls are restored, so that stretching does not deform the control content. For some controls that do not affect display content of the controls after stretching, a width of canvases after stretching can still be retained, to effectively improve aesthetics of the user interface.

According to any one of the first aspect or the implementations of the first aspect, the at least one child view node is of a text type and/or a small image type. The small image type indicates that the width of the canvas corresponding to the child view node is less than a preset threshold and that control content corresponding to the child view node is an image. The text type indicates that control content in the canvas of the child view node is a text. In this way, controls corresponding to view nodes are classified, and the controls may be classified into controls that need to be restored and controls that remain stretched. The controls that need to be restored are restored.

For example, each view node in the view tree of the target application corresponds to statement information. The statement information includes but is not limited to type information, layout information, and the like. The type information indicates a type of each view node.

According to any one of the first aspect or the implementations of the first aspect, the view tree includes a root node and a first view node. The first view node is a view node of a large image type. The large image type indicates that a width of a canvas corresponding to a child view node is greater than or equal to a preset threshold and that control content corresponding to the child view node is an image. That the electronic device restores a width of at least one control on the second user interface to be the same as a width on the first user interface includes: restoring control content of the first view node to an unstretched state, where a width of a canvas of the first view node is a stretched width, and control content that is of the first view node and that is obtained through restoration is displayed in the middle of the canvas of the first view node; and padding a part other than the control content in the canvas of the first view node with a target image. In this way, in this embodiment of this application, corresponding processing is performed on a large image, so that the large image is not deformed after being stretched. In addition, this can ensure that a location at which the large image is displayed on the second display window is in uniform scaling to a location at which the large image is located on the first display window.

According to any one of the first aspect or the implementations of the first aspect, the target image is consistent with partial content of the control content, or the target image is an image obtained by performing Gaussian blur processing on the partial content of the control content. In this way, picture aesthetics can be effectively improved by padding a canvas of the large image.

According to any one of the first aspect or the implementations of the first aspect, a left edge of the first display window is aligned with a left edge of the second display window. The method further includes: receiving a touch operation on a control corresponding to a second view node on the second user interface, where the touch operation is at a first location in the second display window, a distance between the first location and the left edge of the second display window is a first distance value, and a distance between the first location and an upper edge of the second display window is a second distance value; determining a second location to which the first location is mapped in the first display window, where a distance between the second location and the left edge of the first display window is a third distance value, a distance between the second location and an upper edge of the first display window is a fourth distance value, a ratio of the first distance value to the third distance value is equal to a ratio of a width of a second display interface to a width of a first display interface, and the second distance value is equal to the fourth distance value; and determining, based on the second location, a second view node that is on the first user interface of the first display window and that corresponds to the touch operation. In this way, in this embodiment of this application, only the location at which the control is displayed on the interface is changed, but the actual location of the control, in other words, a location obtained by the electronic device in the layout procedure, is not changed. Correspondingly, when dispatching a touch event, the electronic device may obtain, based on a mapping relationship of controls between the second user interface and the first user interface, a control actually operated by the user, and perform a corresponding operation.

For example, the first display window may alternatively be at the center or right of the second display window, or any other location. This is not limited in this application.

According to any one of the first aspect or the implementations of the first aspect, an aspect ratio of the first display window is less than or equal to 0.5, and an aspect ratio of the second display window is greater than 0.5 and less than or equal to 1. In this way, the application may generate the view tree based on the first display window with the aspect ratio close to that of the bar-type mobile phone, and the application does not need to adapt to a size of an actual display window of the electronic device.

According to any one of the first aspect or the implementations of the first aspect, the second display window is displayed in full screen on a screen of the electronic device.

According to any one of the first aspect or the implementations of the first aspect, the target application is any third-party application on the electronic device. In this way, the method in this embodiment of this application may be applied to any third-party application through system-level processing, and the application does not need to make a modification.

According to any one of the first aspect or the implementations of the first aspect, the electronic device is an inward foldable mobile phone, an outward foldable mobile phone, a vehicle-mounted device, a wearable device, and/or a television. In this way, in an application scenario of a foldable mobile phone, the method in this embodiment of this application is used, so that when the foldable mobile phone switches from a single screen to a large screen, content in a user interface displayed on the large screen is similar to content in a user interface displayed on the single screen. This improves display consistency of the user interface of the application when the screen switching is performed.

According to any one of the first aspect or the implementations of the first aspect, that an electronic device obtains a first user interface based on a first display window and a view tree of a target application includes: The electronic device obtains the first user interface based on the second display window and a third view node in the view tree, and based on the first display window and a view node other than the third view node in the view tree. In this way, corresponding to some view nodes of special types, the electronic device may perform layout based on the second display window, so that in the layout phase, widths of the view nodes are adapted to the width of the second display window. The widths of the view nodes of special types may be increased, to stretch a displayable region of the control. The view node of a special type may be of a multi-line text type or a Web View type. For example, for a view node of the multi-line text type, the electronic device performs layout on the view node based on the width of the second display window, so that a multi-line text obtains a wider display region.

According to any one of the first aspect or the implementations of the first aspect, that the electronic device obtains the first user interface based on the second display window and a third view node in the view tree, and based on the first display window and a view node other than the third view node in the view tree includes: The electronic device obtains layout information of the third view node and layout information of another view node, where the layout information of the third view node indicates a location and a size of the third view node on the second display window, and the layout information of the another view node indicates a location and a size of the another view node on the first display window. The electronic device generates the first user interface based on layout information of at least one view node. In this way, when generating the first user interface, the electronic device may obtain, for some view nodes of special types, a display region wider than that of the another node. In addition, the nodes of special types may be stretched without aligning the nodes in a subsequent stretching process.

According to a second aspect, an embodiment of this application provides an electronic device, including one or more memories, a foldable display, and one or more processors. The one or more memories are coupled to the one or more processors. The one or more memories are configured to store computer program code. The program code includes computer instructions. When the one or more processors execute the computer instructions, the electronic device is enabled to perform the following steps: The electronic device obtains a first user interface based on a first display window and a view tree of a target application. A width of the first user interface is the same as a width of the first display window. A height of the first user interface is the same as a height of the first display window. The view tree includes at least one view node. The first user interface includes a control corresponding to the at least one view node. The electronic device stretches the first user interface and a width of each control on the first user interface to obtain a second user interface. A height of each control on the second user interface is equal to a height of each control on the first user interface. The electronic device restores a width of at least one control on the second user interface to be the same as a width on the first user interface. The electronic device displays the second user interface on a second display window. A width of the second user interface is equal to a width of the second display window. A height of the second user interface is equal to a height of the second display window. The height of the second display window is equal to the height of the first display window. The width of the second display window is greater than the width of the first display window.

According to the second aspect, when the one or more processors execute the computer instructions, the electronic device is enabled to perform the following step: The electronic device obtains the view tree generated by the target application. The view tree is generated by the target application based on window information transmitted by the electronic device to the target application, and the window information indicates the width and the height of the first display window.

According to any one of the second aspect or the implementations of the first aspect, when the one or more processors execute the computer instructions, the electronic device is enabled to perform the following steps: The electronic device obtains layout information of each of the at least one view node. The layout information indicates a size and a location of each view node on the first display window. The electronic device generates the first user interface based on the layout information of each view node.

According to any one of the second aspect or the implementations of the first aspect, when the one or more processors execute the computer instructions, the electronic device is enabled to perform the following step: The electronic device creates a canvas for each view node based on the layout information of each view node, and draws, on the canvas corresponding to each view node, control content corresponding to each view node to obtain the first user interface. A height of a canvas corresponding to a root view node of the view node is the height of the first user interface, and a width of the canvas corresponding to the root view node is the width of the first user interface.

According to any one of the second aspect or the implementations of the first aspect, when the one or more processors execute the computer instructions, the electronic device is enabled to perform the following step: The electronic device stretches a width of a canvas of the at least one view node to obtain the second user interface. Control content in the canvas of the at least one view node is stretched as the canvas is stretched.

According to any one of the second aspect or the implementations of the first aspect, when the one or more processors execute the computer instructions, the electronic device is enabled to perform the following step: The electronic device restores a width of a canvas corresponding to at least one child view node on the second user interface to an unstretched width. The at least one child view node belongs to the plurality of child view nodes.

According to any one of the second aspect or the implementations of the first aspect, the at least one child view node is of a text type and/or a small image type. The small image type indicates that the width of the canvas corresponding to the child view node is less than a preset threshold and that control content corresponding to the child view node is an image. The text type indicates that control content in the canvas of the child view node is a text.

According to any one of the second aspect or the implementations of the first aspect, the view tree includes a root node and a first view node. The first view node is a view node of a large image type. The large image type indicates that a width of a canvas corresponding to a child view node is greater than or equal to a preset threshold and that control content corresponding to the child view node is an image. When the one or more processors execute the computer instructions, the electronic device is enabled to perform the following steps: restoring control content of the first view node to an unstretched state, where a width of a canvas of the first view node is a stretched width, and control content that is of the first view node and that is obtained through restoration is displayed in the middle of the canvas of the first view node; and padding a part other than the control content in the canvas of the first view node with a target image.

According to any one of the second aspect or the implementations of the first aspect, the target image is consistent with partial content of the control content, or the target image is an image obtained by performing Gaussian blur processing on the partial content of the control content.

According to any one of the second aspect or the implementations of the first aspect, a left edge of the first display window is aligned with a left edge of the second display window. When the one or more processors execute the computer instructions, the electronic device is enabled to perform the following steps: receiving a touch operation on a control corresponding to a second view node on the second user interface, where the touch operation is at a first location in the second display window, a distance between the first location and the left edge of the second display window is a first distance value, and a distance between the first location and an upper edge of the second display window is a second distance value; determining a second location to which the first location is mapped in the first display window, where a distance between the second location and the left edge of the first display window is a third distance value, a distance between the second location and an upper edge of the first display window is a fourth distance value, a ratio of the first distance value to the third distance value is equal to a ratio of a width of a second display interface to a width of a first display interface, and the second distance value is equal to the fourth distance value; and determining, based on the second location, a second view node that is on the first user interface of the first display window and that corresponds to the touch operation.

According to any one of the second aspect or the implementations of the first aspect, an aspect ratio of the first display window is less than or equal to 0.5, and an aspect ratio of the second display window is greater than 0.5 and less than or equal to 1.

According to any one of the second aspect or the implementations of the first aspect, the second display window is displayed in full screen on a screen of the electronic device.

According to any one of the second aspect or the implementations of the first aspect, the target application is any third-party application on the electronic device.

According to any one of the second aspect or the implementations of the first aspect, the electronic device is an inward foldable mobile phone, an outward foldable mobile phone, a vehicle-mounted device, a wearable device, and/or a television.

Any one of the second aspect and the implementations of the second aspect respectively corresponds to any one of the first aspect and the implementations of the first aspect. For technical effects corresponding to any one of the second aspect and the implementations of the second aspect, refer to technical effects corresponding to any one of the first aspect and the implementations of the first aspect. Details are not described herein again.

According to a third aspect, an embodiment of this application provides a computer-readable medium, configured to store a computer program. The computer program includes instructions used to perform the method according to any one of the first aspect or the possible implementations of the first aspect.

According to a fourth aspect, an embodiment of this application provides a computer program. The computer program includes instructions used to perform the method according to any one of the first aspect or the possible implementations of the first aspect.

According to a fifth aspect, an embodiment of this application provides a chip. The chip includes a processing circuit and a transceiver pin. The transceiver pin and the processing circuit communicate with each other through an internal connection path. The processing circuit performs the method according to any one of the first aspect or the possible implementations of the first aspect, to control a receive pin to receive a signal, and to control a transmit pin to send a signal.

### BRIEF DESCRIPTION OF DRAWINGS

FIG. 1 is a diagram of an example of a hardware structure of an electronic device;
FIG. 2 is a diagram of an example of a foldable mobile phone;
FIG. 3 is a diagram of an example of a software structure of an electronic device;
FIG. 4(1) to FIG. 4(3) are diagrams of examples of a user interface of a foldable mobile phone;
FIG. 5(A) and FIG. 5(B) are a diagram of an example of effect of applying an interface display method according to an embodiment of this application;
FIG. 6 is a schematic flowchart of an example of an interface display method;
FIG. 7a and FIG. 7b are diagrams of examples of structures of a ViewTree;
FIG. 7c is a schematic flowchart of an example of layout system processing;
FIG. 7d is a diagram of an example of a layout phase;
FIG. 7e is a diagram of an example of a drawing phase;
FIG. 7f(1) and FIG. 7f(2) are diagrams of examples of a user interface;
FIG. 8 is a schematic flowchart of an example of an interface display method;
FIG. 9a is a diagram of an example of a first display window and a second display window;
FIG. 9b is a diagram of an example of a user interface obtained through performing layout based on a first display window;
FIG. 10a is a diagram of an example of canvas stretching;
FIG. 10b is a diagram of an example of a stretched user interface;
FIG. 10c is a diagram of an example of a restored user interface;
FIG. 11a and FIG. 11b are diagrams of examples of a node restoration process;
FIG. 12a to FIG. 12c are diagrams of examples of image padding;
FIG. 13a and FIG. 13b are schematic flowcharts of examples of processing a multi-line text type node;
FIG. 14(1) and FIG. 14(2) are a schematic flowchart of an example of dispatching an event;
FIG. 15 is a diagram of an example of another application scenario; and
FIG. 16 is a diagram of an example of a structure of an apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In embodiments of this application, the word "example", "for example", or the like is used to represent giving an example, an illustration, or a description. Any embodiment or design scheme described as an "example" or with "for example" in embodiments of this application shall not be explained as being more preferred or having more advantages than other embodiments or design schemes. Exactly, use of the word "example", "for example", or the like is intended to present a related concept in a specific manner.

In the descriptions of embodiments of this application, unless otherwise stated, "a plurality of" means two or more than two. For example, a plurality of processing units are two or more processing units, and a plurality of systems are two or more systems.

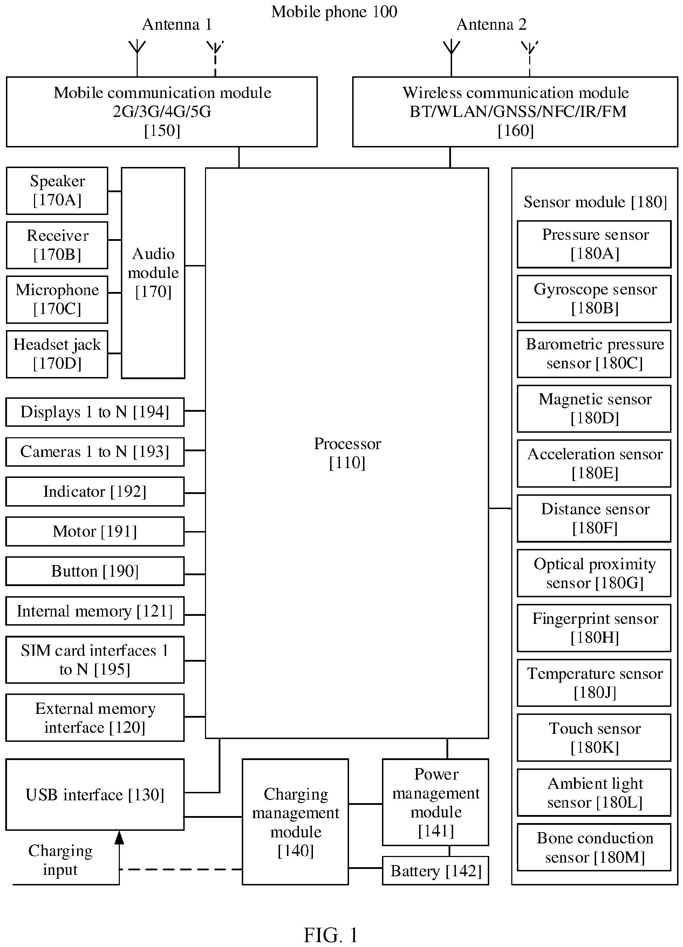

FIG. 1 is a diagram of a structure of an electronic device 100. It should be understood that, the electronic device 100 shown in FIG. 1 is merely an example of an electronic device, and the electronic device 100 may have more or fewer components than those shown in the figure, or may combine two or more components, or may have different component configurations. Various components shown in FIG. 1 may be implemented in hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces a waiting time of the processor 110, and improves system efficiency.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may also be reused to improve antenna utilization. For example, the antenna 1 may be multiplexed as a diversity antenna of a wireless local area network. In some other embodiments, the antennas may be used in conjunction with a tuning switch.

The mobile communication module 150 may provide a solution of wireless communication that is applied to the electronic device 100 and that includes a 2G/3G/4G/5G or the like. The mobile communication module 150 may include at least one filter, a switch, a power amplifier, a low noise amplifier (low noise amplifier, LNA), and the like.

The wireless communication module 160 may provide a solution of wireless communication that is applied to the electronic device 100 and that includes a wireless local area network (wireless local area network, WLAN) (such as a wireless fidelity (wireless fidelity, Wi-Fi) network), a Bluetooth (Bluetooth, BT), a global navigation satellite system (global navigation satellite system, GNSS), a frequency modulation (frequency modulation, FM) technology, a near field communication (near field communication, NFC) technology, an infrared (infrared, IR) technology and the like. The wireless communication module 160 may be one or more components that integrate at least one communication processing module.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 implements a display function through a GPU, the display 194, the application processor, and the like. The GPU is an image processing microprocessor, and is connected to the display 194 and the application processor. The GPU is configured to perform mathematical and geometric calculations, and is configured for graphics rendering. The processor 110 may include one or more GPUs that execute program instructions to generate or change display information.

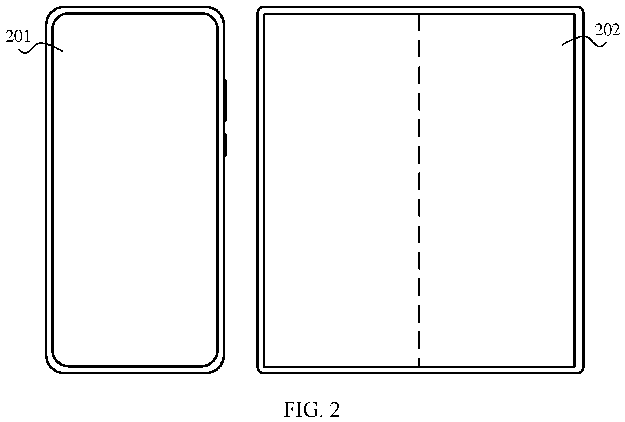

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1. For example, FIG. 2 is a diagram of a foldable mobile phone. Refer to FIG. 2. The foldable mobile phone includes an outer display screen (outer screen for short) 201 and an inner display screen (inner screen for short) 202. A height of the outer screen 201 is equal to that of the inner screen 202, and a screen width of the inner screen 202 is twice a screen width of the outer screen 201. Certainly, the display screens in FIG. 2 are merely examples. In another embodiment, a ratio of the inner screen to the outer screen may alternatively be another ratio. For example, the outer screen 201 may be a screen smaller than a housing of the mobile phone. For example, the outer screen 201 may be a square screen, or a rectangle smaller than the outer screen 201 shown in FIG. 2, and is disposed at the middle or any region of the housing of the screen of the mobile phone. The inner screen may be the same as that in FIG. 2. A specific screen size and ratio may be set based on an actual requirement. This is not limited in this application. It should be noted that, in addition to an inward foldable mobile phone shown in this embodiment of this application, the foldable mobile phone may further include a foldable mobile phone in another form, for example, an outward foldable mobile phone. This is not limited in this application. Details are not described in the following. It should be further noted that, in this embodiment of this application, only display on an interface of the foldable mobile phone is used as an example for description. In another embodiment, an interface display solution in this embodiment of this application may alternatively be applied to a device, for example, a tablet, a vehicle-mounted device, or a television, with a screen aspect ratio greatly different from that of a bar-type mobile phone. Specific implementation is the same as that of display on the inner screen of the foldable mobile phone. Examples are not described one by one in this application.

The electronic device 100 may implement a photographing function through the ISP, the camera 193, the video codec, the GPU, the display 194, the application processor, or the like.

The external memory interface 120 may be configured to be connected to an external memory card, for example, a Micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 executes various function applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (for example, audio data or a phone book) created during use of the electronic device 100, and the like.

The electronic device 100 may implement audio functions by using the audio module 170, the speaker 170A, the receiver 170B, the microphone 170C, the headset interface 170D, the application processor, and the like. For example, music playing and recording may be implemented.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

A software system of the electronic device 100 may use a layered architecture, an event-driven architecture, a microkernel architecture, a microservice architecture, or a cloud architecture. In an embodiment of this application, a software structure of the electronic device 100 is described by using an Android system with a layered architecture as an example.

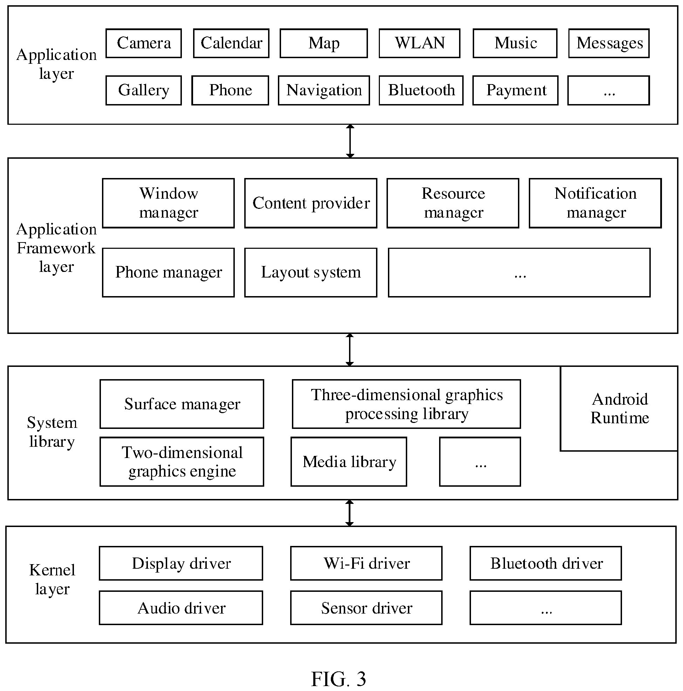

FIG. 3 is a block diagram of a software structure of the electronic device 100 according to an embodiment of this application.

In a layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Camera, Gallery, Calendar, Phone, Map, Navigation, WLAN, Bluetooth, Music, Videos, Messages, and Payment.

The application framework layer provides an application programming interface (application programming interface, API) and a programming framework for an application of the application layer. The application framework layer includes some predefined functions.

As shown in FIG. 3, the application framework layer may include a window manager, a content provider, a view system, a phone manager, a resource manager, a notification manager, a layout system, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

Based on an interface element (which may alternatively be referred to as a window element, a page element, or the like, and this is not limited in this application) input by an application, the layout system may perform proper arrangement and layout on each element and draw an interface.

The Android runtime includes a kernel library and a virtual machine. The Android runtime is responsible for scheduling and management of the Android system.

The kernel library includes two parts: a function that needs to be called in java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Libraries), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, and static image files. The media library may support a plurality of audio and video encoding formats.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It may be understood that, components included in the system framework layer, and the system library and runtime layer that are shown in FIG. 3 do not constitute any specific limitation on the electronic device 100. In some other embodiments of this application, the electronic device 100 may include more or fewer components than those shown in the figure, or some components may be combined, or some components may be split, or there may be a different component layout.

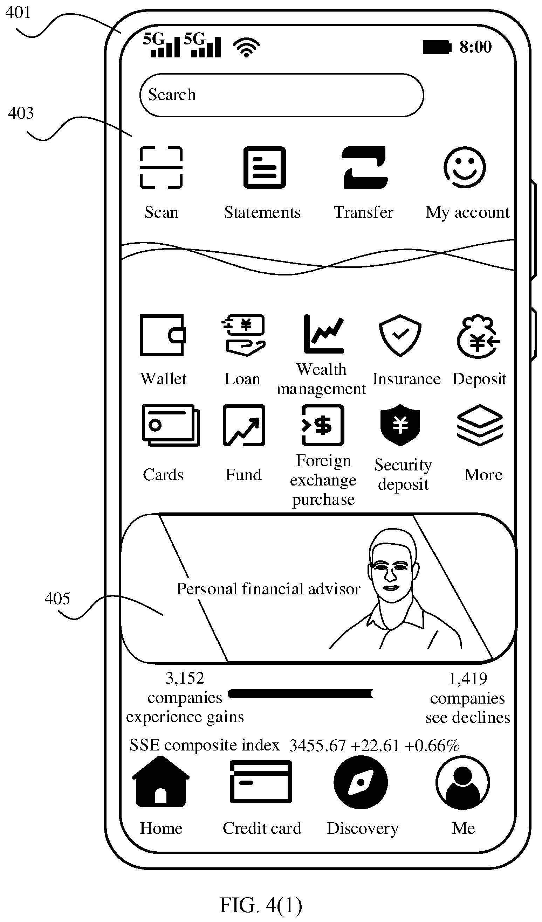

FIG. 4(1) to FIG. 4(3) are diagrams of examples of a user interface of a foldable mobile phone. Refer to FIG. 4(1) to FIG. 4(3). For example, an example in which resolution of an outer screen 401 of a foldable mobile phone is 2700*1100 pixels, and resolution of an inner screen 402 of the foldable mobile phone is 2700*2200 pixels is used. In other words, a width of a display interface of the inner screen 402 is twice a width of a display interface of the outer screen 401.

As shown in FIG. 4(1), the outer screen 401 of the foldable mobile phone displays a user interface 403 (which may alternatively be referred to as an application interface, an application display interface, or the like, and this is not limited in this application) of a payment application. The user interface 403 is displayed in full screen on the outer screen 401. In other words, resolution corresponding to the user interface 403 is 2700*1100 pixels, and is equal to dimensions of the outer screen 401. It should be noted that, dimensions mentioned in this embodiment of this application, for example, dimensions of a screen, are dimensions of the screen that can be configured to display interface content, but are not actual appearance dimensions of the screen. Details are not described in the following.

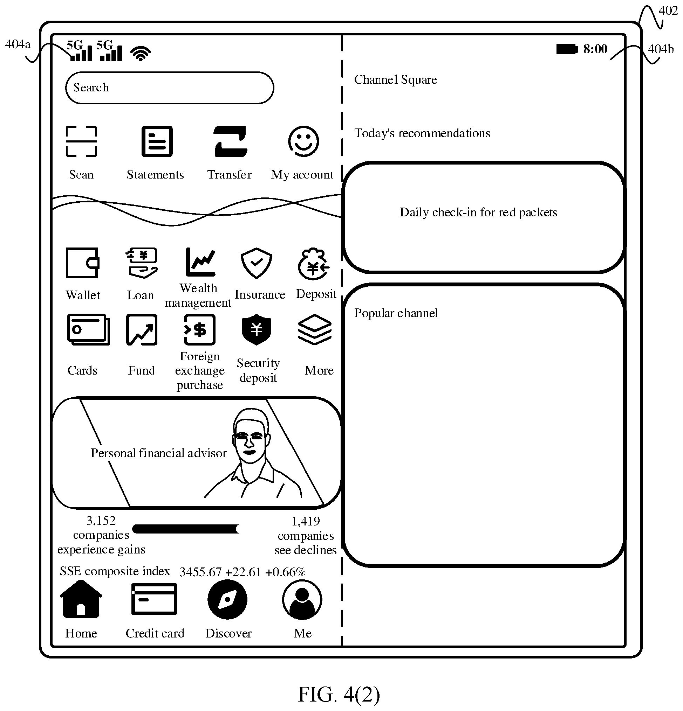

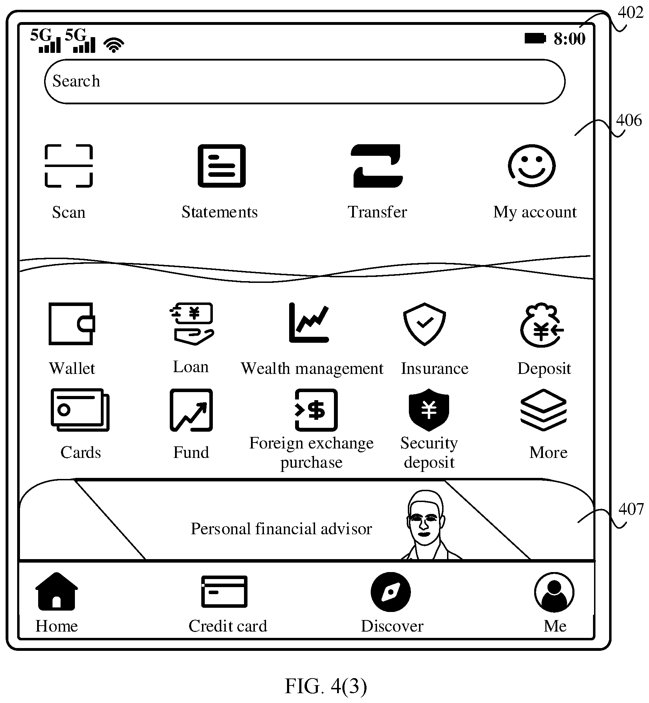

The user may open a foldable screen, so that the foldable screen changes from a folded state (namely, a state shown in FIG. 4(1)) to an unfolded state (for example, as shown in FIG. 4(2) or FIG. 4(3)). The foldable mobile phone in the unfolded state displays a user interface of a payment application on an inner screen. Currently, an application interface created by a third-party application is usually applicable to a horizontal and vertical ratio (also known as an aspect ratio, namely, a proportion of a width to a height of a screen) of a screen of a bar-type mobile phone. Generally, the aspect ratio of the screen of the bar-type mobile phone (or an outer screen of a foldable mobile phone) is about 1:2, for example, resolution of 2700*1100 pixels. An aspect ratio of an inner screen of the foldable mobile phone is usually 1:1 or close to 1: 1. Therefore, a user interface that is of the third-party application on the mobile phone and that is arranged based on the aspect ratio of the bar-type mobile phone is not applicable to the inner screen of the foldable screen with the aspect ratio of 1:1 (or close to 1: 1, and this is not described in the following).

FIG. 4(2) shows an example of a display manner of a user interface on the inner screen. In the example shown in FIG. 4(2), the inner screen 402 displays the user interface of the application in a multi-interface manner (which may alternatively be referred to as a parallel-view manner). Refer to FIG. 4(2). When the inner screen 402 displays the application interface, the mobile phone may display a user interface 404a of the payment application on the left half screen of the inner screen 402 (namely, the half region on the left of a dotted line), and displays a user interface 404b of the payment application on the right half screen of the inner screen 402 (namely, the half region on the right of the dotted line). Display content on the user interface 404a is different from that on the user interface 404b. For example, the user interface 404b may display, on the user interface 404a, a user interface that is displayed after the mobile phone responds to a received tapping operation that is performed by the user on a "Discover" control (which may alternatively be referred to as a button, a component, an element, an option, or the like, and this is not limited in this application). The aspect ratios of the left half screen and the right half screen of the inner screen 402 are close to that of the bar-type mobile phone. For example, dimensions of the inner screen 402 are 2700*2200, and the aspect ratios of both the left half screen/the right half screen are 2700* 1100. It may be understood that, in the example shown in FIG. 4(2), the inner screen 402 displays the two user interfaces of the third-party application on two display windows (namely, a display window on the left half screen and a display window on the right half screen) with the same (or similar) aspect ratios as that of the bar-type mobile phone. Dimensions of the display window corresponding to each user interface are equivalent to dimensions of a display window of the bar-type mobile phone. Therefore, in this example, the third-party application still performs layout according to the display window whose aspect ratio is about 1:2, and the third-party application does not need to change the interface layout. In addition, content of each of the plurality of pages displayed by the mobile phone is the same as content displayed by the bar-panel mobile phone (or the housing of the folding-screen mobile phone).

FIG. 4(3) shows an example of another display manner of a user interface on the inner screen. In the example shown in FIG. 4(2), the inner screen 402 displays the user interface of the application in a manner of stretching the interface or changing content displayed on the user interface. Refer to FIG. 4(3). For example, in the unfolded state, the inner screen 402 of the mobile phone displays a user interface 406 of the application. In this example, when the mobile phone displays the user interface of the application on the inner screen 402, the user interface is properly scaled up, so that the user interface adapts to the dimensions of the inner screen 402. However, as shown in FIG. 4(3), in this display manner, content on the user interface 406 displayed on the inner screen 402 is less than content on the outer screen 401 or content on the user interface 404a displayed on the left half screen of the inner screen 402. This reduces an amount of information displayed on the screen. For example, the user interface 403 on the outer screen 401 shown in FIG. 4(1) includes an image 405. However, elements on the user interface 406 are scaled up for display, and the elements are all moved downward and stretched for display. As a result, when the image is displayed on the user interface 406, the image is also moved downward and stretched for display, as an image 407 shown in FIG. 4(3). In this example, the third-party application needs to perform layout again on the user interface based on dimensions of a display window of the screen. In addition, as shown in FIG. 4(1) to FIG. 4(3), in a current display method, a manner of changing interface content displayed on a display screen is configured to display a user interface. For example, a multi-interface display manner is used in FIG. 4(2), and a manner of rearranging elements on the interface is used in FIG. 4(3). The manner of changing interface content displayed on a display screen may not meet an expectation of the user on the display of the user interface.

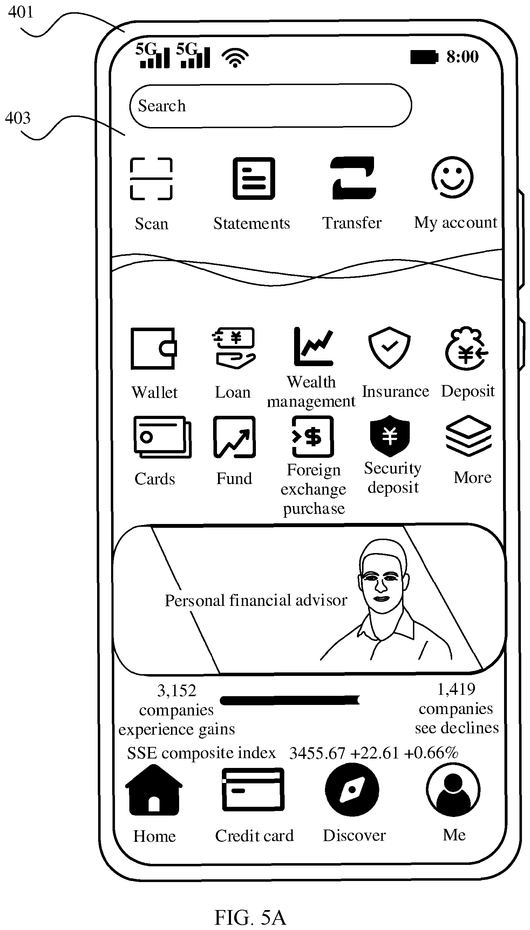

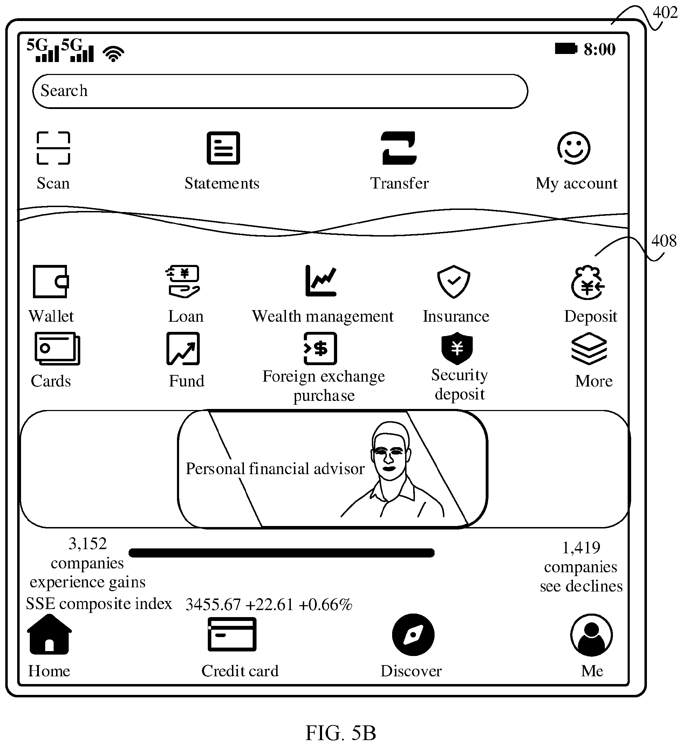

An embodiment of this application provides an interface display method, to enable content on a user interface displayed on a large screen (for example, the inner screen 202 of the foldable screen shown in FIG. 2) with a ratio greatly different from that of a screen of a bar-type mobile phone to be the same as content on a user interface displayed on the screen of the bar-type mobile phone. In other words, in the interface display method in this embodiment of this application, the user interface is not displayed in a manner of scaling up an element on the user interface on the screen or adding an element to the user interface (for example, in a parallel-view manner). This effectively improves user experience. FIG. 5(A) and FIG. 5(B) are a diagram of an example of effect of applying an interface display method according to an embodiment of this application. Refer to FIG. 5(A) and FIG. 5(B). An inward foldable mobile phone is used as an example. The outer screen 401 of the mobile phone displays the user interface 403 of the payment application (for related descriptions, refer to FIG. 4(1), and details are not described herein again). The mobile phone changes to an unfolded state in response to a received operation of opening the foldable screen by the user. The mobile phone displays a user interface 408 of the payment application on the inner screen 402. As shown in FIG. 5(A) and FIG. 5(B), interface elements included in the user interface 408 are the same as the interface elements included in the user interface 403. It may alternatively be understood that, information displayed on the user interface is the same. In this way, an amount of information displayed may not be reduced when the dimensions of the screen changes. In some embodiments, the user interface that is of the payment application and that is displayed on the inner screen 402 may further include more content (a specific example will be described in detail in the following embodiments). The look and feel of the user interface on the inner screen 402 is closer to that on the bar-type mobile phone. In addition, when the user uses the foldable mobile phone, the foldable mobile phone in the unfolded state and the folded state displays same content on the user interfaces, and the interfaces have similar layouts. Correspondingly, in a process of switching between the folded state and the unfolded state of the foldable mobile phone, continuity of user interfaces displayed on the inner and outer screens can be enhanced. For example, the user views the image 405 on the user interface 403 displayed on the outer screen 401. In a conventional technology shown in FIG. 4(1) to FIG. 4(3), after the folded state is changed to the unfolded state, a location of the image 405 on the interface is changed, resulting in poor consistency of display on the user interface after switching between the folded state and the unfolded state. However, in the solution in this embodiment of this application, as shown in FIG. 5(A) and FIG. 5(B), after the folded state is switched to the unfolded state, (alternatively, the unfolded state is switched to the folded state), a horizontal location of the image 405 does not change. This can effectively enhance continuity when the user browses the user interface, and improves user experience.

It should be noted that, in this embodiment of this application, the inward foldable mobile phone is used as an example for description. For an outward foldable mobile phone, after the mobile phone is changed from a folded state to an unfolded (semi-folded) state, dimensions of a screen changes (widens), and an aspect ratio of the screen changes (increases). This is also applicable to the method described in embodiments of this application.

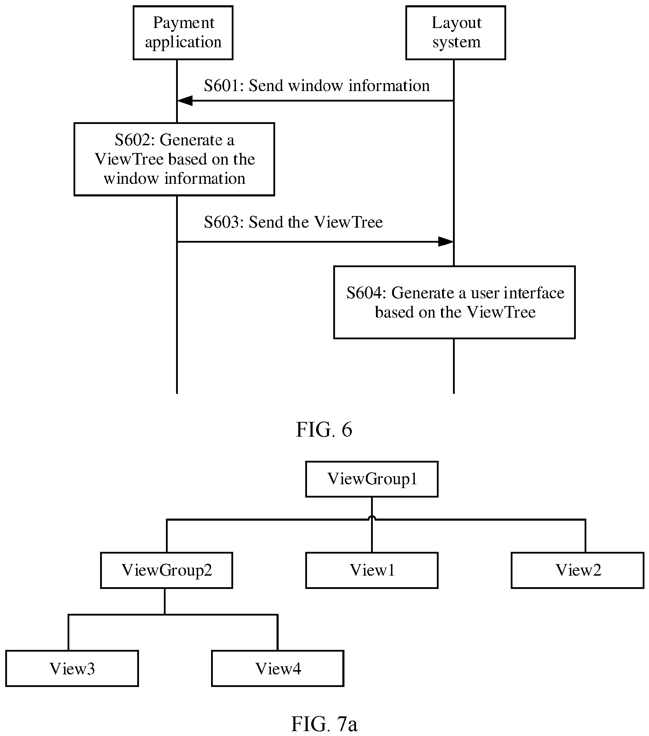

Before the interface display method in this embodiment of this application is described, a bar-type mobile phone is used as an example to briefly describe an interface display principle and a procedure of interaction between modules. FIG. 6 is a flowchart of an example of an interface display method. Refer to FIG. 6. The method may specifically include but is not limited to the following steps.

S601: A layout system sends window information to a payment application.

For example, the payment application is still used as an example for description. A user may tap an icon of the payment application, and the mobile phone runs the payment application in response to the received user operation.

The layout system sends the window information to the payment application. The window information indicates a size of a window for a user interface displayed on a screen of the mobile phone. In this example, an example in which the user interface of the payment application is displayed in full screen is used for description. Correspondingly, the window information sent by the layout system to the payment application indicates dimensions of the user interface (namely, dimensions of the screen) when being displayed on the mobile phone in full screen. For example, the window information indicates that the dimensions of the user interface displayed on the screen are 2700*1100 pixels.

It should be noted that, all description manners related to the user interface in this embodiment of this application are that the interface is displayed on the screen. In another embodiment, it may alternatively be understood as that the user interface is displayed on an application window (which may alternatively be referred to as a display window, an application display window, or the like, and this is not limited in this application). Correspondingly, it may alternatively be understood as that the window information indicates a size of the display window.

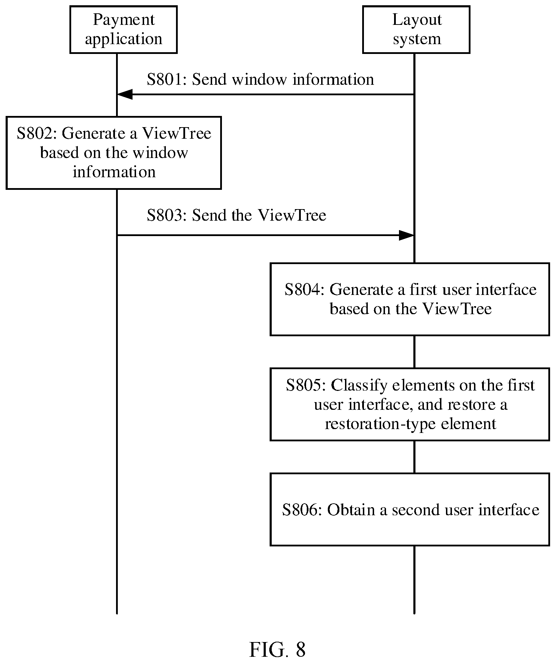

It should be further noted that, in both this embodiment and the embodiment shown in FIG. 8, an example in which each display screen displays the user interface in full screen is used for description. In other words, the size of the display window of the application is the same as the size of the screen. An embodiment in which the size of the display window is different from that of the screen is described in the following embodiment. Details are not described herein.

S602: The payment application generates a ViewTree (view tree) based on the window information.

S603: The payment application sends the ViewTree to the layout system.

For example, the payment application receives the window information sent by the layout system, and may determine the size of the window displayed on the user interface. The payment application may generate the ViewTree based on an interface element and the window information. The interface element may be understood as an element included in an interface to be displayed on the display window. Optionally, the interface element may be locally cached by the application, or may be obtained by the application from a server. This is not limited in this application.

FIG. 7a is a diagram of an example of a structure of a ViewTree. Refer to FIG. 7a. Each interface (or page) of an application corresponds to a ViewTree that describes a layout structure of the application. A View (view) and a ViewGroup (view group) are constituent units of the ViewTree, and may alternatively be understood as that the View and the ViewGroup are basic components of an Android UI (User Interface, user interface). The ViewGroup may include a View and/or a ViewGroup, and the ViewGroup is an extension of the View. The ViewGroup and the View are nested in a tree structure layer by layer to form the ViewTree. In the descriptions in this embodiment of this application, the View and/or the ViewGroup in the ViewTree may alternatively be referred to as a node in the ViewTree, and may alternatively be referred to as a component, an element, or a control in another embodiment. In other words, the "node" in this embodiment of this application may be the View or the ViewGroup. This is not described in the following.

An example in which the ViewTree displayed in FIG. 7a corresponds to the user interface 403 in FIG. 5(A) or FIG. 4(1) to FIG. 4(3) is used for description. It should be noted that,

FIG. 7a may optionally show some components of the ViewTree corresponding to the user interface 403. The ViewTree corresponding to the user interface 403 may include more or fewer components than those shown in FIG. 7a. This is not limited in this application.

Still refer to FIG. 7a. For example, a ViewGroup1 is a root node of the ViewTree. The root node ViewGroup 1 may include at least one ViewGroup and/or at least one View, for example, including a ViewGroup2, a View1, and a View2. Each ViewGroup may further include at least one ViewGroup and/or at least one View. For example, the ViewGroup2 includes a View3 and a View4. The ViewGoup1 is a parent node of the ViewGroup2, the View1, and the View2, and correspondingly, the ViewGroup2, the View1, and the View2 are child nodes of the ViewGoup1. The ViewGroup2 is a parent node of the View3 and the View4, and the View3 and the View4 are child nodes of the ViewGroup2. For example, each node in the ViewTree corresponds to respective statement information (which may alternatively be referred to as attribute information, description information, or the like, and this is not limited in this application). The statement information includes but is not limited to information indicating layout of a control (or a component, an element, or the like, and this is not described in the following) corresponding to a node on a display window (the display window is a window indicated by the window information in S601), and type information indicating a type of the node. For example, the type of the node may alternatively be understood as a type of the control corresponding to the node. Details are not described in the following. In this embodiment of this application, a node (for example, a View) may be understood as a correspondence between the node and a control, or may be understood as that a node is a control. This is not limited in this application. For example, the layout information may be understood as a location and a size of the View on the display window (for example, a location and a size of the View in a parent node View of the View). The type information may include a root layout type, a text type, and the like. For example, type information of the ViewGroup1 is "DecorView", indicating that the type of the ViewGroup1 is a root node type. For another example, type information of the View 4 is "TextView", indicating that the type of the View 4 is a text type.

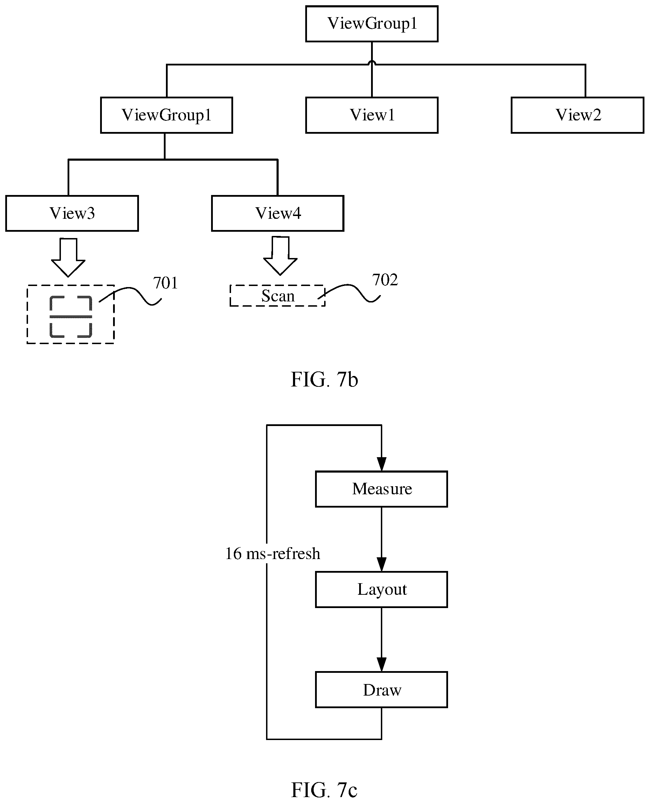

Optionally, each node in the ViewTree corresponds to one control (which may alternatively be referred to as a component, an element, or the like, and this is not described in the following) on the user interface. For example, FIG. 7b is used as an example. For example, the View 3 corresponds to a "Scan" icon control 701 in "Scan" controls on the user interface 403, and the View4 corresponds to a "Scan" text control 702 in the "Scan" controls on the user interface 404. In the ViewTree generated by the payment application, statement information is set for the View3 and the View4, to set information such as specific content, types of the View3 and the View4 and layouts of the View3 and the View4 in a window. For example, the statement information corresponding to the View4 includes but is not limited to: type information of the View4, content information of the View4, layout information of the View4 in a window. More specifically, the type information of the View4 indicates a text type, the content information of the View4 is the text "Scan", and the layout information of the View4 in the window is left alignment. In other words, the layout information indicates that the View 4 is close to a left edge of the parent node of the View 4 (the layout information may also include information such as an offset).

For example, after creating the ViewTree, the payment application outputs the ViewTree (including each node in the ViewTree and statement information of the node) to the layout system.

S604: The layout system generates a user interface based on the ViewTree.

For example, after receiving the ViewTree, the layout system performs a layout and refresh procedure based on the ViewTree. As shown in FIG. 7c, the layout and refresh procedure may include a measure (measure) procedure, a layout (layout) procedure, and a draw (draw) procedure.

For example, the measure procedure is optionally as follows: The layout system traverses all nodes (including the View and/or the ViewGroup) in the ViewTree from top to bottom, and determines actual dimensions, in other words, the maximum width and height of the node, of each node on the user interface based on statement information corresponding to each node.

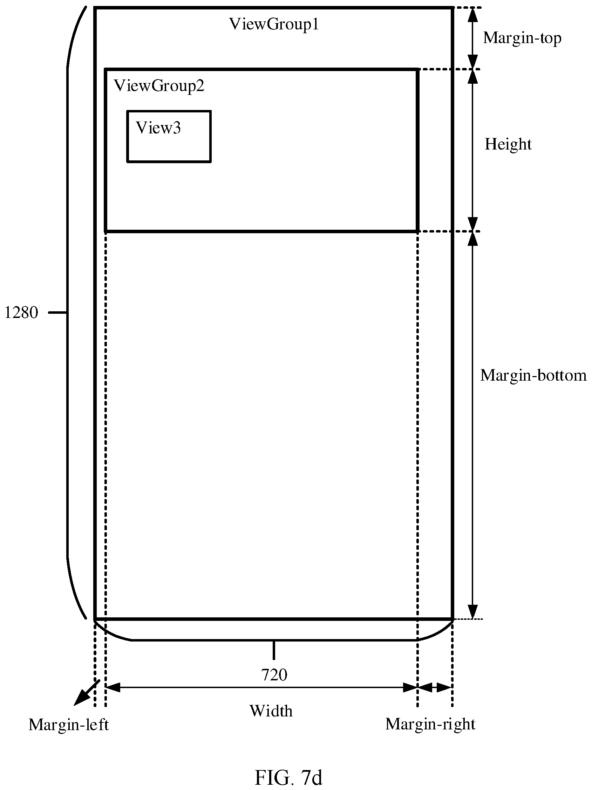

For example, the layout procedure is optionally as follows: The layout system traverses all nodes in the ViewTree from top to bottom, and determines a location and a size of each child node in a parent node of the child node based on statement information corresponding to each node. For example, each node may be considered as a rectangle. As described above, nodes in the ViewTree are in a parent-child relationship, and all nodes except the root node correspond to a parent node. The layout system can calculate distances between the left, top, right, and bottom edges of a rectangular View or ViewGroup and the left, top, right, and bottom edges of a parent View or ViewGroup of the View or ViewGroup, to obtain a location and a size of each rectangular View or ViewGroup in the parent node View or ViewGroup of the View or ViewGroup. A location and a size corresponding to the root node are a location and a size corresponding to the display window of the application. For example, the ViewTree in FIG. 7a is still used as an example. The layout system first traverses the root node ViewGroup1. Refer to FIG. 7d. In this example, an example in which the user interface of the application is displayed on a screen in full screen is used. Resolution of a display window corresponding to the user interface is the same as that of the screen (for example, the resolution is 1280*720 pixels). Correspondingly, a location and a size corresponding to the root node ViewGroup1 are the same as those of the display window of the screen. In other words, resolution is also 1280*720 pixels. If the user interface of the application is displayed on the screen in a form of a split screen or a floating window, the corresponding display window is of a resolution size of the split screen or the floating window. Details are not described in the following. The layout system then continues to traverse the child nodes of the ViewGroup1, including the ViewGroup2, the View1, and the View2. In this embodiment of this application, an order of traversing the ViewTree is from top to bottom and from left to right. In another embodiment, another traversal order may be used. This is not limited in this application. The ViewGroup2 is used as an example. Still refer to FIG. 7d. The layout system may determine, based on a width and a height (which are obtained in a measure procedure) and statement information of the ViewGroup2, a distance (namely, margin-left) between a left side of the ViewGroup2 and a left side of the parent node (namely, the ViewGroup1) of the ViewGroup2, a distance (namely, margin-top) between an upper side of the ViewGroup2 and an upper side of the ViewGroup 1, a distance (namely, margin-right) between a right side of the ViewGroup2 and a right side of the ViewGroup1, and a distance (namely, margin-bottom) between a lower side of the ViewGroup2 and a lower side of the ViewGroup1, to obtain a location and a size (namely, layout) of the ViewGroup2 in the parent node (namely, the ViewGroup1) of the ViewGroup2. The layout system then continues to traverse the child nodes of the ViewGroup2, including the View3 and the View4. The View3 is used as an example. The layout system may determine, based on a width and a height (which are obtained in a measure procedure) of the View 3 and statement information of the View3, a distance between a left side of the View3 and a left side of the parent node (namely, the ViewGroup2) of the View3, a distance between an upper side of the View3 and an upper side of the ViewGroup2, a distance between a right side of the View3 and a right side of the ViewGroup2, and a distance between a lower side of the View3 and a lower side of the ViewGroup2, to obtain a location and a size of the View3 in the parent node ViewGroup2 of the View3.

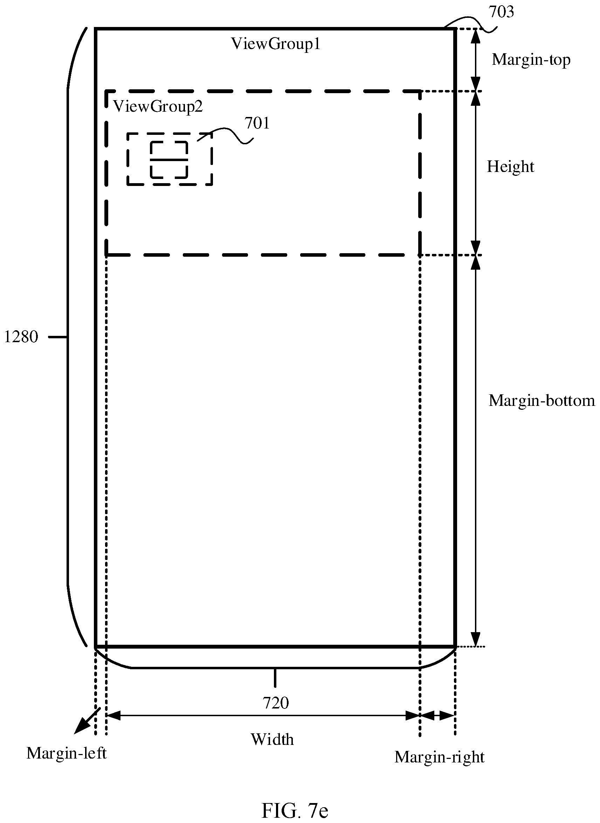

For example, in the draw procedure, optionally, a canvas (Canvas) is created for the layout system, and content of each node in the ViewTree is drawn at a corresponding location on the canvas based on a result obtained in a calculation procedure, to obtain the user interface. It should be noted that, in the draw procedure, all nodes in the ViewTree are traversed from top to bottom, and this is the same as that in the measure procedure and the layout procedure. The layout system may draw the content corresponding to each node (which may alternatively be understood as a UI corresponding to each node) in sequence based on the traversal order. It should be further noted that, in a process of drawing each node on the canvas, each node in the ViewTree corresponds to a respective canvas, and a size of the canvas corresponding to the node is the same as a size of the node. In other words, a width of the canvas is the same as a width of the node, and a height of the canvas is the same as a height of the node. The width and the height of the node are obtained in the measure procedure described above. The layout system may draw the content corresponding to each node on the canvas corresponding to each node. It should be noted that, dimensions of a canvas corresponding to the root node ViewGroup1 are the same as the dimensions of the display window (for the concept, refer to the foregoing descriptions, and details are not described herein again) of the application. For example, refer to FIG. 7e. The layout system creates a canvas 703 of the root node ViewGroup1, and draws content corresponding to the root node ViewGroup1 on the canvas 703. For example, if the content corresponding to the root node ViewGroup1 is "red", the layout system may pad the canvas 703 in red as a background color of the user interface. Then, based on the structure of the ViewTree, the layout system continues to traverse the ViewGroup2. The layout system may draw a user interface of the ViewGroup2 at a corresponding location on the canvas 703 of the ViewGroup1, based on the location and the size (namely, the result obtained in the layout procedure) of the ViewGroup2 in the parent node ViewGroup1 of the ViewGroup2. Specifically, refer to FIG. 7e. The layout system performs drawing the canvas of the ViewGroup2 at a corresponding location, and content corresponding to the ViewGroup2 is drawn on the canvas of the ViewGroup2. The layout system further traverses the View1 and the View2 in sequence, and draws, at corresponding locations on the ViewGroup1, user interfaces (not shown in the figure) of the View1 and the View2 based on a location and a size of the View1 in the ViewGroup1 and a location and a size of the View2 in the ViewGroup 1 that are obtained in the layout procedure. Still refer to FIG. 7e. For example, the layout system traverses the View 3, and the layout system may determine a location and a size of the View3 (which may be understood as a canvas or a user interface of the View3) in the parent node ViewGroup2 of the View 3 based on the result obtained in the layout procedure. The layout system draws the UI (which may alternatively be referred to as an image of the View 3, a view of the View 3, a graphic of the View 3, or the like, and this is not limited in this application and not described in the following) of the View3 at the corresponding location, namely, the "Scan" icon control 701.

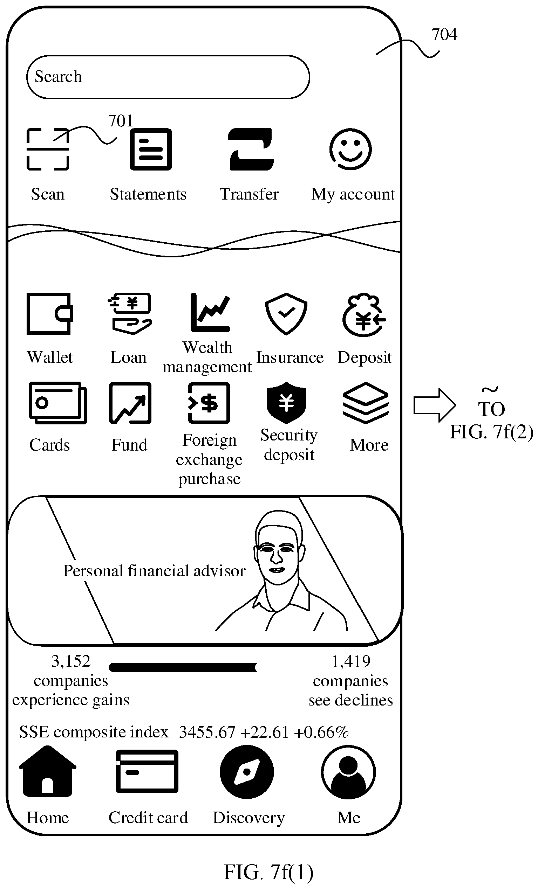

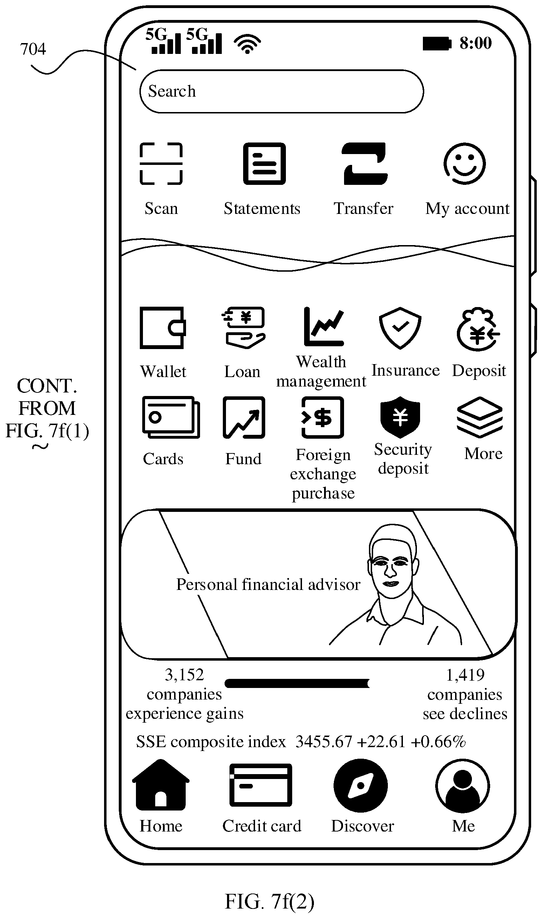

For example, the layout system continues to, in the foregoing manner, traverse each node in the ViewTree and perform drawing on each node, to obtain a user interface shown in FIG. 7f(1) (which may alternatively be understood as the user interface corresponding to the ViewTree). Refer to FIG. 7f(2). After the layout system generates a user interface 704, the layout system outputs the user interface 704 to a related module for processing such as rendering, and displays the user interface 704 in full screen on the screen.

Optionally, in an Android system, the layout system may invoke a member function-PerformTraversals of a ViewRoot class to perform the measure, layout, and draw procedures. This is not limited in this application.

Optionally, in each embodiment of this application, an example in which a layout and refresh procedure is triggered every 16 ms (corresponding to a frame rate of 60 frames/s). In another embodiment, a refresh interval varies based on different frame rates, and may be set based on an actual requirement. This is not limited in this application. This is not described in the following. In other words, in this embodiment of this application, the layout system performs the measure, layout, and draw procedures again shown in FIG. 7c every 16 ms, to refresh the user interface displayed on the screen. Optionally, if the layout system detects that the user interface does not change in a refresh cycle, the layout system may not perform the procedures shown in FIG. 7c, to reduce power consumption.

The following describes in detail an interface display method in embodiments of this application with reference to the accompanying drawings. FIG. 8 is a schematic flowchart of an example of an interface display method. Refer to FIG. 8. The method specifically includes:

S801: A layout system sends window information to a payment application.

In this embodiment of this application, a difference between the window information sent by the layout system to the payment application and that in S601 lies in that the display window information sent in S601 is information corresponding to a window to be displayed on a user interface. For example, in FIG. 7f(1) and FIG. 7f(2), the user interface 704 is displayed in full screen on the display screen, and a size of a display window corresponding to the user interface 704 is the same as resolution of the screen of the mobile phone. Correspondingly, in S601, resolution carried in the display window information sent by the layout system is the same as the resolution of the screen of the mobile phone, so that the application may perform layout based on a size indicated by the window information. However, in this embodiment of this application, a height of a display window indicated by the window information sent by the layout system to the payment application is the same as a height of an actual display window, and a width of the display window indicated by the window information is less than a width of the actual display window. For example, to distinguish between sizes of the actual display window and the display window, in the following, the display window indicated by the window information is marked as a first display window, and the actual display window is marked as a second display window. In this embodiment of this application, a size of the first display window indicated by the window information intends to be close to a display size of a bar-type mobile phone, so that the application can still perform layout based on a display window close to the bar-type mobile phone.

In this embodiment, the window width indicated by the window information sent by the layout system to the payment application is half (namely, 50%) of the width of the window that is actually to be displayed, and the window height indicated by the window information is the same as the height of the window that is actually to be displayed. In another embodiment, a ratio of the width of the first display window indicated by the window information to the width of the second display window (namely, the actual display window) may be greater than 50% or less than 50%. For example, the width of the first display window may be one-third or two-thirds of the width of the second display window. A main purpose is to enable the window indicated by the window information sent by the layout system to the application to be close to the bar-type mobile phone. It should be noted that, aspect ratios of the bar-type mobile phone are different. Therefore, in this embodiment of this application, when the height of the display window indicated by the window information is consistent with that of the actual display window, a proportion of the width to the height of the display window is close to that of the bar-type mobile phone (or an outer screen of a foldable mobile phone with a large inner screen).

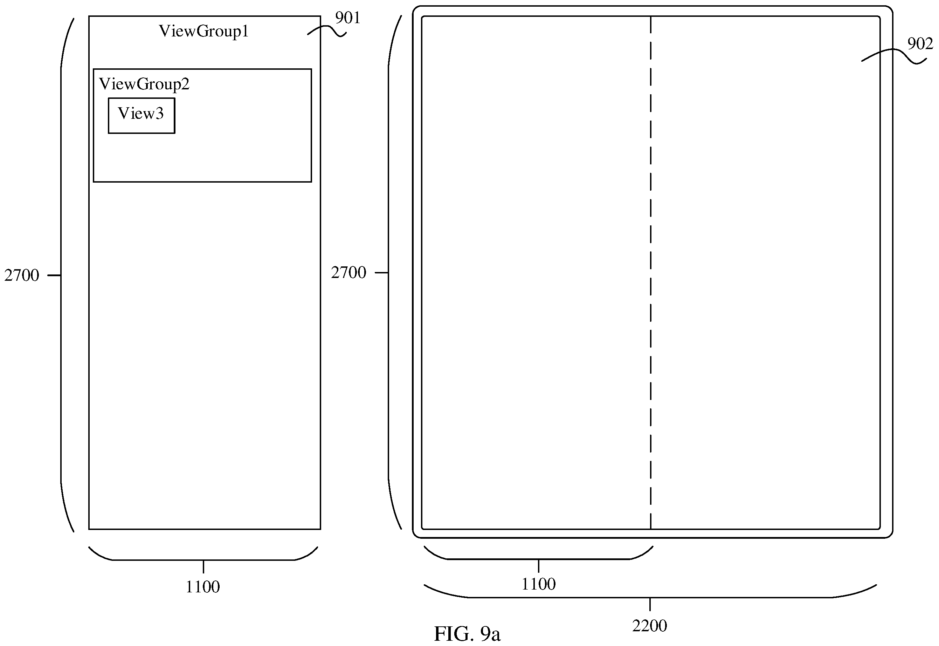

For example, refer to FIG. 9a. For example, resolution of the inner screen 902 of the foldable mobile phone is 2700*2200 pixels. In this embodiment, an example in which the user interface is displayed in full screen on the inner screen 902 is used for description. In other words, resolution of the actual display window of the user interface of the payment application is 2700*2200 pixels. The resolution of the display window indicated by the window information sent by the layout system to the payment application is 2700* 1100 pixels. In other words, the width of the first display window 901 described in the window information sent by the layout system is half of the width of the actual display window (namely, the second display window), and lengths (namely, heights) are the same.

It should be noted that, the window information sent by the layout system to the payment application includes only the height and the width of the first display window, and does not indicate a location of the first display window in the actual display window. The dashed line shown in FIG. 9a is merely an example for showing a relationship between the width of the first display window and the width of the second display window.

It should be further noted that, in this embodiment of this application, the payment application is used as an example for description. In another embodiment, this embodiment of this application may be used for interface display of another application, for example, a shopping application, a social application, or a travel application. This is not limited in this application.

S802: The payment application generates a ViewTree based on the window information.

S803: The payment application sends the ViewTree to the layout system.

For example, the payment application receives the window information input by the layout system. The payment application may generate the ViewTree based on the window information, and output the ViewTree to the layout system. For specific details, refer to the related descriptions in S602 and S603. Details are not described herein again.

It should be noted that, as described above, the size indicated by the window information obtained by the application is the size of the first display window, namely, half of the width (with the same height) of the actual display window (namely, the second display window). Therefore, the ViewTree generated by the payment application is also generated based on the first display window.

S804: The layout system generates a first user interface based on the ViewTree.

For example, after receiving the ViewTree, the layout system performs a layout and refresh procedure based on the ViewTree, namely, measure, layout, and draw procedures.

In this example, the measure procedure and the layout procedure are the same as those in S604. In this example, the layout system may perform layout on the ViewTree based on the window information. In other words, after performing the measure and layout procedures, the layout system obtains layout (including a location and a size) of each node in the ViewTree in the first display window. For example, the diagram shown in FIG. 9a is still used as examples of results of the measure and layout procedures. The layout system performs the measure and layout procedures in sequence on each node, for example, the ViewGroup1, the ViewGroup2, and the View3, of the ViewTree (the ViewTree in FIG. 7a is still used as an example) based on the size of the first window 901. The layout of the ViewGroup1 (namely, the root node) obtained by the layout system is the same as the layout of the first display window. In other words, the size and the location of the ViewGroup1 are the same as those of the first display window. The layout system continues to traverse the ViewTree to obtain the location and size of the ViewGroup2 in the ViewGroup1. As shown in FIG. 9a, the layout system may calculate the location and the size of the ViewGroup2 in the ViewGroup1, and then, the layout system may calculate the location and the size of the View3 in the parent node ViewGroup2 of the View3. For a specific obtaining manner, refer to the related descriptions in FIG. 6. Details are not described herein again. As shown in FIG. 9a, the layout result obtained by the layout system is obtained based on the first display window. In other words, the location and the size that are of each View and that are calculated by the layout system through measurement are in the first display window. The width of the first display window is half of the width of the second display window (namely, the actual display window).

It should be noted that, as described above, for the ViewTree created by the application based on the window information of the first display window, the application only obtains the height and the width of the first display window, but the information cannot indicate the location of the first display window on the screen. For example, in the measure and layout procedures, the layout system may perform measurement and layout based on an actual location of the first display window on the screen. It may be understood that, the measurement and layout results obtained by the layout system is an actual location and size of a node (an element, or the like) corresponding to the node on the display screen. In this embodiment of this application, an example in which in the layout system, the actual display location of the first display window is close to the left side of the second display window is used for description. In another embodiment, the location of the first display window may alternatively be at another location of the second display window. For example, the location of the first display window may be in the middle, or may be on the right. This is not limited in this application.

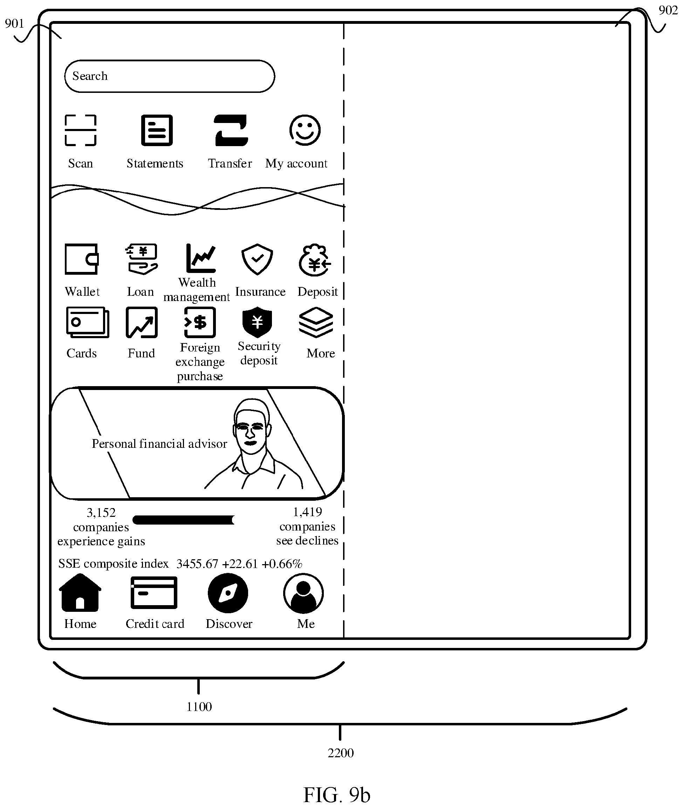

FIG. 9b is a diagram of a user interface obtained by performing layout based on the first display window. It should be noted that, the diagram is merely used to help a person skilled in the art better understand this solution, and the layout system does not actually draws the user interface. Refer to FIG. 9b. For example, the layout system performs layout on the user interface based on the first display window. Effect obtained through layout is performed is close to display effect of the bar-type mobile phone. In other words, in this embodiment of this application, the layout system performs the measure and layout procedures based on the window information, so that layout of each element (namely, the component) on the user interface is close to layout on an interface on the bar-type mobile phone. Still refer to FIG. 9b. For example, if the user interface corresponding to the first display window is displayed on the inner screen 902, the user interface occupies half of the screen of the inner screen 902. In other words, the height of the first display window is the same as a height of a window displayed in full screen. The width (namely, 1100) is half of the width (namely, 2200) of the display window in full screen (that is, the second display window).

In this embodiment of this application, in the draw procedure, the layout system sets the width of the canvas corresponding to each node (including the ViewGroup and the View) in the ViewTree to twice the width of the first display window, and sets the height of the canvas corresponding to each node to be the same as the height of the first display window. It may be understood that, in this embodiment of this application, if the layout system performs drawing based on the result obtained in the layout procedure, in other words, a size of a canvas of the root node is the same as the size of the first window (for a method, refer to the descriptions in FIG. 6), an obtained diagram is shown in FIG. 9b. In other words, the width of the user interface is equal to half of the width of the inner screen 902. However, in this embodiment of this application, the canvas is stretched horizontally (and remains same in the vertical direction). In other words, each of canvases of the root node and child nodes is set to twice the width of the first display window, that is, to be the same as the width of the second display window (namely, the actual display window). Therefore, a width of a drawn user interface is the same as the width of the second display window.

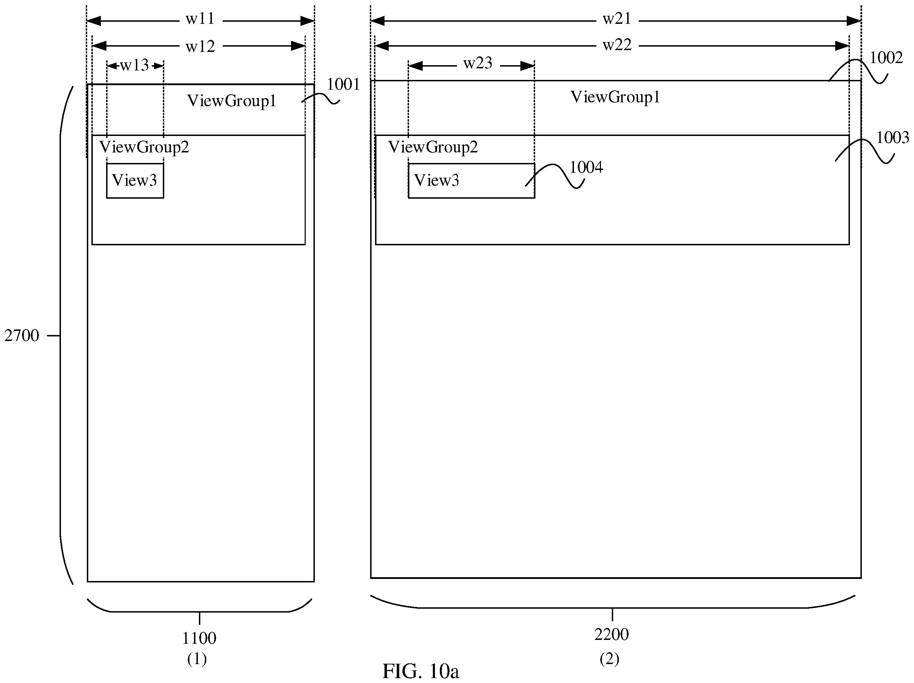

To help a person skilled in the art better understand a canvas stretching solution in this embodiment of this application, the following provides detailed descriptions with reference to the accompanying drawings. Refer to (1) in FIG. 10a. For example, the layout system performs the measure and layout procedures based on the ViewTree and the statement information that are input by the payment application, and may obtain layout of each node on the first display window (which is actually the location and the size of each node in the parent node of the node). For specific descriptions, refer to FIG. 9a. Details are not described herein again. Refer to (1) in FIG. 10a. After performing the measure and layout procedures, the layout system may obtain that, in the first display window 1001, the width of the ViewGroup1 is w11, the width of the ViewGoup2 is w12, and the width of the View3 is w13. w11 is equal to the width (for example, 1100 pixels) of the first display window. For example, in the drawing procedure, the layout system stretches the width of the canvas of each node to twice the width in the layout result.

As shown in (2) in FIG. 10a, the layout system traverses the ViewTree in sequence, and the layout system creates a canvas 1002 of the ViewGroup1. The width w21 of the canvas 1002 of the root node ViewGroup1 is twice the width w11 of the ViewGroup1 in the layout result. The layout system may draw the content corresponding to the ViewGroup1 on the canvas of the ViewGroup1.

The layout system continues to traverse the ViewTree, and the layout system creates a canvas 1003 of the ViewGroup2. A width w22 of the canvas 1003 is twice the width w12 of the ViewGroup2 in the layout result. The layout system may draw the content corresponding to the ViewGroup2 on the canvas 1003 of the ViewGroup2.

Next, the layout system creates a canvas 1004 of the View3 in the foregoing manner, and a width w23 of the canvas 1004 is twice the w13. The layout system may draw the content (for example, the "Scan" icon) corresponding to the View3 on the canvas of the View3.

It should be noted that, in FIG. 10a, only some nodes in the ViewTree are used as an example for description. Same or similar processing may be performed on other nodes. Examples are not described herein one by one.

It should be further noted that, in the foregoing procedure, the canvas of each node is only stretched horizontally, without changing the margin-top between the upper side of each node and the upper side of the parent node of each node and the margin-bottom between the lower side and the lower side of the parent node of each node. In addition, the height of each node is not changed.

It should be further noted that, as described above, in this embodiment of this application, an example in which the first display window is on the left of the second display window is used for description. Correspondingly, in the layout procedure, location information that is of each node and that is obtained by the layout system is obtained for a scenario in which the first display window is on the left of the second display window. Correspondingly, in this example, the stretching procedure shown in FIG. 10a may be understood as stretching the canvas of each node to the right. In another embodiment, the layout system stretches the canvas based on the location of the first display window in the second display window. For example, if the first display window is at the center location of the second display window, it may be understood that, in the canvas stretching procedure, the canvas is stretched toward two sides. For another example, if the first display window is on the right of the second display window, it may be understood that, in the canvas stretching procedure, the canvas is stretched to the left.

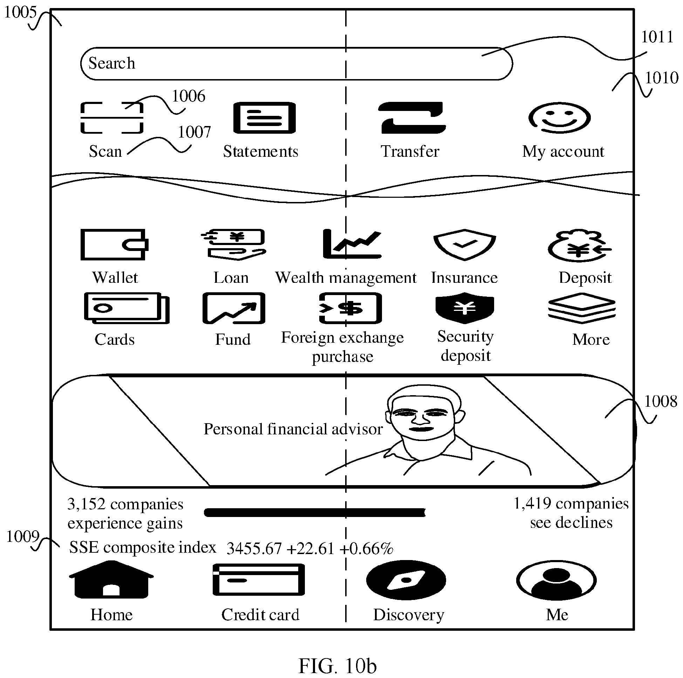

Refer to FIG. 10b. After the layout system finishes traversing the ViewTree, a first user interface 1005 may be obtained. For example, dimensions of the first user interface 1005 (which may alternatively be understood as the dimensions of the canvas corresponding to the root node ViewGroup1) are the same as the dimensions of the second display window (namely, the actual display window), for example, resolution of 2700*2200. The first user interface 1005 includes but is not limited to the UI corresponding to the root node ViewGroup1, the UI corresponding to the View3 (namely, a "Scan" icon control 1006), the UI corresponding to the View4 (namely, a "Scan" text control 1007), and a UI corresponding to another View. For example, the first user interface 1005 may include an image control 1008 (which may alternatively be referred to as an image component, an image element, or the like, and this is not limited in this application), a text control 1009, a background control 1010, and an input box control 1011. It can be learned from FIG. 10b that content included in the user interface drawn on the canvas 1005 is approximately the same as content included in the first display window. In addition, an image corresponding to each control is a result of stretching.

Optionally, in this embodiment of this application, the layout system may stretch the canvas by using a Canvas.scale method. For example, in each example of this application, for each display window, canvas, and screen, an upper left corner serves as a coordinate origin, a horizontal direction serves as a horizontal axis, and a vertical direction serves as a vertical axis. The layout system uses the Canvas. scale method to scale up the canvas of each View twice in the horizontal axis direction and keep the canvas same in the vertical axis direction (in other words, the margin-top, the margin-bottom, and the height are not changed), to obtain a stretched user interface.

S805: Classify elements on the first user interface, and restore a restoration-type element.

S806: Obtain a second user interface.

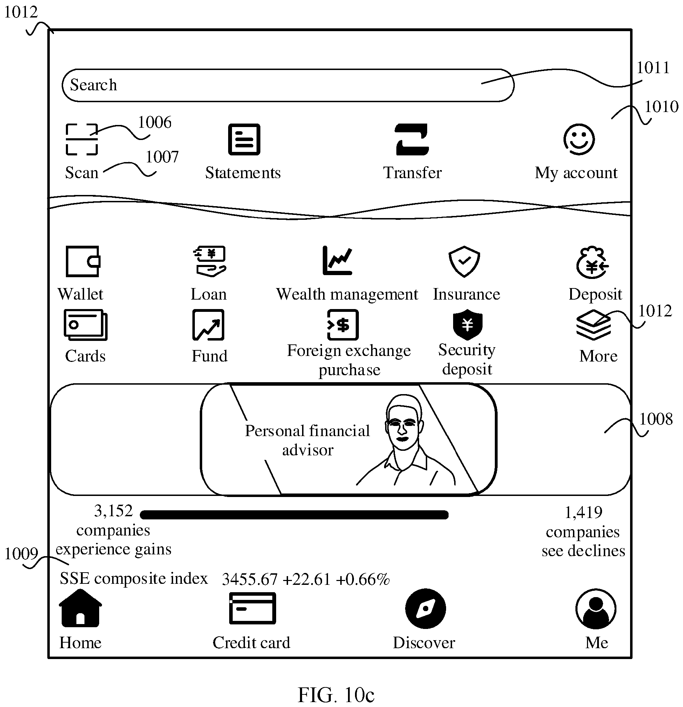

For example, because the canvas is stretched horizontally, some controls may be deformed. The layout system may classify each View, and restore a canvas corresponding to a View of a to-be-restored type (a restoration-type for short), to obtain the second user interface, for example, a second user interface 1012 shown in FIG. 10c.

Optionally, the layout system may use the Canvas. scale method to scale down a canvas of the restoration-type View by a factor of two in the horizontal axis direction, and the canvas remains same in the vertical axis direction (in other words, the margin-top, the margin-bottom, and the height are not changed), to obtain a restored user interface (for example, the second user interface 1012).

For example, in this embodiment of this application, the layout system may classify the nodes based on table 1, and the nodes are restored or keep a stretched state based on strategies corresponding to node types. It should be noted that, as described above, in this embodiment of this application, the node may alternatively be understood as a control. Correspondingly, a node type may alternatively be understood as a control type. Details are not described in the following.

**Table 1**

| Control type | Strategy |
|---|---|
| Root layout type | Keep a stretched state |
| Text type | Restore |
| Large image type | Keep a stretched state |
| Small image type | Restore |
| ViewGroup type | Keep a stretched state |
| Input box type | Keep a stretched state |
| Another type | Keep a stretched state |

For example, as shown in the table 1, the control type includes but is not limited to the root layout type, the text type, the large image type, the small image type, the ViewGroup type, the input box type, and the another type. It should be noted that, in this embodiment of this application, only an example in a table manner is used for description. In another embodiment, the layout system may alternatively maintain the correspondence between types and strategies in another form.

For example, the root layout type (which may alternatively be referred to as a root layout control type) is a type corresponding to the root node. Type information in the statement information of the root node is "DecorView". Based on the type information, the layout system may determine the root node in the ViewTree, for example, type information of the ViewGroup1 in FIG. 7a is "DecorView". A corresponding strategy of the root node type is to keep the stretched state. For example, in the canvas 1005 (which may alternatively be referred to as the first user interface 1005) corresponding to the root node in FIG. 10b, in a restoration procedure, the layout system identifies that the type of the ViewGroup1 is "DecorView", and determines, by searching Table 1, that the corresponding strategy is to keep the current stretching state. In this case, a graphic of the ViewGroup1 on the second user interface 1012 shown in FIG. 10c still remains in the stretched state. In other words, the width of the canvas of the ViewGroup1 is a stretched width, for example, w21 in FIG. 10a.

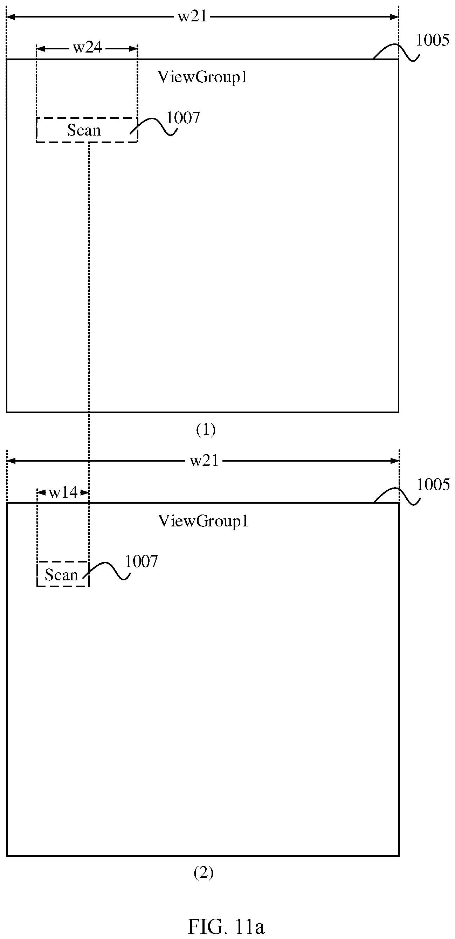

For example, for the text type (which may alternatively be referred to as a text control type), type information corresponding to a node is identified as "TextView". A corresponding strategy of this type of control is restoration. In other words, the layout system restores the width of the canvas of this type of control to an unstretched width, and the margin-top, the margin-bottom (for concepts, refer to the foregoing descriptions, and details are not described herein again), and the height remain same. For example, the "Scan" text control 1007 in FIG. 10b is used as an example. Refer to (1) in FIG. 11a. On the first user interface 1005, a width of the "Sweep" text control 1007 corresponding to the View4 is w24. The width is a stretched width. For descriptions of canvas stretching, refer to the foregoing descriptions. Details are not described herein again. Refer to (2) in FIG. 11a. For example, in a restoration procedure, the layout system detects that a type of the View4 is the text type, and a corresponding strategy is restoration. The layout system restores the horizontal width of the canvas of the View4 to the unstretched width, namely, the result obtained in the measure and layout procedures. For example, the width is w14 (for an obtaining manner, refer to the foregoing descriptions, and details are not described herein again). w24 is twice w14. As shown in (2) in FIG. 11a, the graphic of the "Scan" text control 1007 is restored as the canvas of the View 4 is restored, and the graphic of the "Scan" text control 1007 changes from the stretched state to a restored state. It should be noted that, the margin-top, the margin-bottom, and the height of the canvas of the View4, namely, the canvas to which the "Scan" text control 1007 belongs, remain same.

For example, the large image type (which may alternatively be referred to as a large image control type) is optionally an image type node with a width greater than or equal to a threshold, and a corresponding strategy of the type is to keep the stretched state. In this embodiment of this application, an example in which the threshold is 50% of the display window is used for description. The layout system may determine whether an image is a large image based on the result obtained in the layout procedure. For example, an image 1008 in FIG. 10b is used as an example. The layout system determines, based on the results obtained in the measure and layout procedures, that a width of the image 1008 on the first display window 1001 is greater than 50% of the width of the first display window, and the layout system may determine that the image 1008 is a large image. Optionally, the layout system may alternatively perform determining based on a result obtained through stretching. For example, in FIG. 10b, if a width of the stretched image 1008 exceeds 50% of the width of the second display window (namely, the canvas 1005), the layout system may determine that the image 1008 is a large image. In this application, the threshold is merely an example of suitability. A specific threshold may be set based on an actual requirement. This is not limited in this application. For example, after determining that a type corresponding to a node is the large image type, the layout system may keep a canvas of the node in the stretched state.

For example, the small image type (which may alternatively be referred to as a small image control type) is optionally an image with a width less than or equal to the threshold. For example, a node type of the "Scan" icon control 1006 in FIG. 10b is the image type. The layout system detects, based on the width of the image, that the width of the image is less than the threshold, and may determine that the "Scan" icon control 903 is of the small image type. The specific determining method is similar to that of the large image. Details are not described herein.

For example, for the ViewGroup type (which may alternatively be referred to as a ViewGroup control type), type information corresponding to a node is identified as "ViewGroup", and a corresponding strategy of the node type is to keep the stretched state. For example, after detecting that a type of a node is the "ViewGroup", the layout system may determine, by searching the table 1, that a restoration strategy of the node is to keep the stretched state. Specific descriptions are similar to those of the root node type. Details are not described herein again.

For example, for the input box type, type information corresponding to a node is identified as "EditText", a corresponding strategy of the input box type is to keep the stretched state. For example, the input box control 1011 in FIG. 10b still remains a stretched state on the second user interface 1012 shown in FIG. 10c.

For example, for a control of another type, in other words, a control that does not meet a classification condition of any of the foregoing control types, a corresponding strategy of the control of another type is to optionally keep the stretched state or to be restored.

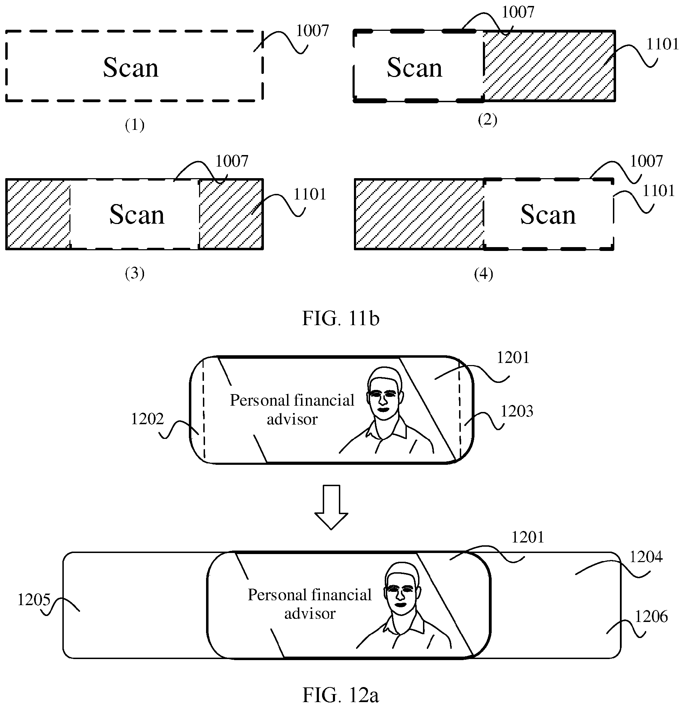

It should be noted that, in this embodiment of this application, in the restoration process, an alignment manner of restored nodes is left alignment by default. For example, refer to (1) in FIG. 11b. The View4, namely, a stretched state of the "Scan" text control 1007 is shown as an example. Refer to (2) in FIG. 11b. A region 1101 is a stretched region, and a location and a size of the stretched region are the same as a location and a size of the stretched View4. It should be noted that, in (2) in FIG. 11b, the canvas of the View 4 blocks a part of the region 1101. In other words, the View4 is included in the region 1101. It may be understood as that the stretched region is a region occupied by the stretched View4. In this embodiment of this application, after the layout system restores the canvas of the View4, an alignment manner of the View4 is the left alignment by default. In other words, as shown in (2) in FIG. 11b, after the canvas of View 4, namely, the "Scan" text control 1007, is restored to dimensions before stretching, the location of the canvas of the View4 is moved to the left of the region 1101. In other words, a left side of the View 4 is aligned with a left side of the region 1101, an upper side of the View4 is aligned with an upper side of the region 1101, and a lower side of the View4 is aligned with a lower side of the region 1101.

In a possible implementation, for a node whose type corresponding to the restoration strategy (referred to as a restoration type for short in this embodiment of this application), in the restoration process, the layout system may perform alignment on the node based on a manner in which the node is aligned with a parent node before the node is stretched. The alignment manner includes the left alignment manner, and further includes a center alignment manner, a right alignment manner, and the like. It should be noted that, the layout system may obtain, in the layout procedure, a manner of aligning each node with the parent node.

For the center alignment manner, refer to (3) in FIG. 11b. For example, after the layout system restores the View4, the location of the View4 is moved to the middle of the region 1101. In other words, a central point of the View4 coincides with a central point of the region 1101, the upper side of the View4 is aligned with the upper side of the region 1101, and the lower side of the View4 is aligned with the lower side of the region 1101.

For the right alignment manner, refer to (4) in FIG. 11b. For example, after the layout system restores the View, the location of the View is moved to the right of the region 1101. In other words, the right side of the View 4 is aligned with the right side of the region 1101, the upper side of the View 4 is aligned with the upper side of the region 1101, and the lower side of the View 4 is aligned with the lower side of the region 1101.

An alignment manner of each node of the restoration type may be by default, for example, the left alignment by default. In this embodiment of this application, as described above, for the alignment manner of each node, refer to the alignment manner in the layout procedure. For example, in the restoration process, the layout system traverses the nodes in sequence and restores the nodes or keeps the nodes stretched. When the layout system processes a node, for example, the ViewGroup2 is used as an example, the layout system may obtain an alignment manner of each node in the ViewGroup2. For example, if a manner for aligning the View3 with the center of the ViewGroup2 is used, the layout system may align the View3 with the center of the stretched region after the View3 is restored.

It should be noted that, any alignment manner, for example, the left alignment, the center alignment, or the right alignment, may be used for some controls whose alignment manners are not defined in the statement. This is not limited in this application.

Optionally, the layout system may use the Canvas.translate method to perform alignment on the canvas corresponding to the View.

In a possible implementation, for a control of the large image type, as described above, a corresponding strategy of the control is to keep the stretched state. In an example, for a solid-color control of the large image type, the solid-color control of the large image type may be kept in a current stretched state. For example, the background control 1010 in FIG. 10c is a solid-color image (which may alternatively be a gradient color or the like). If the solid-color control of the large image type is kept in the stretched state, the image is less blurry, and this is acceptable. Therefore, the image may remain the current stretched state. In another example, for a control of the large image type and in a non-solid color, for example, the image control 1008 in FIG. 10b and FIG. 10c, the layout system may restore the image, and pad a part other than image content in the canvas. In this embodiment of this application, a padding manner may include a Gaussian blur padding manner, a background color padding manner, or the like.

For example, refer to FIG. 12a. The layout system performs image recognition on a large image control 1201, and may recognize that a left edge region 1202 of the large image control 1201 is padded with a solid color (which may alternatively be a gradient color or the like), and a right edge region 1203 is also padded with a solid color. The left and right edges may be padded with a same color, or different colors. This is not limited in this application. For example, the layout system restores the large image control 1201 to dimensions before stretching. It should be noted that, this step may be understood as restoring and centering the image content in the View, and the canvas of the View remains to be of a stretched width. As shown in FIG. 12a, after the large image control 1201 (specifically, the image content) is restored and centered, the layout system may pad a region 1205 between a left side of the restored large image control 1201 and a left side of a canvas 1204 corresponding to a View to which the control belongs. Content with which the region 1205 is padded is the same as content (which may be a pattern, a color, a gradient color, or the like, and this is not limited in this application) in the left edge region 1202 of the large image control 1201. Correspondingly, the layout system pads a region 1206 between a right side of the restored large image control 1201 and a right side of the canvas 1204 corresponding to a node to which the control belongs. Content with which the region 1206 is padded is the same as content (which may be a pattern, a color, a gradient color, or the like, and this is not limited in this application) in the right edge region 1203 of the large image control 1201.

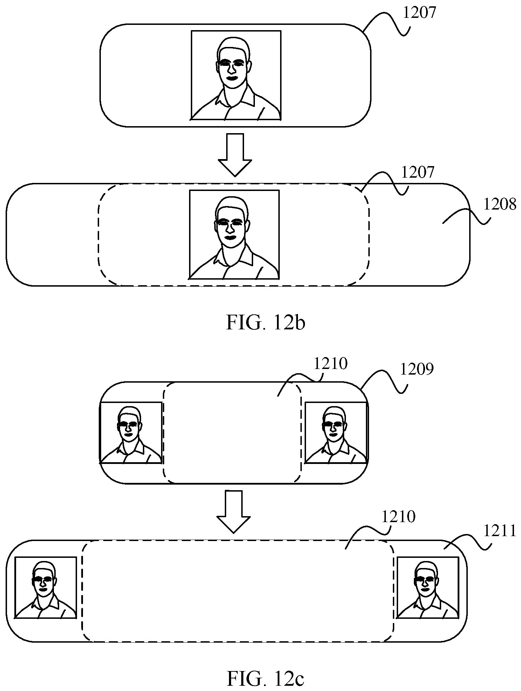

For another example, refer to FIG. 12b. The layout system performs image recognition on a large image control 1207, and may recognize that a background color of the large image control 1207 is a solid color (which may alternatively be a gradient color or the like). The layout system may restore and center image content of the large image control 1207. The layout system pads a region other than the restored large image control 1207 in a canvas 1208 corresponding to a node to which the large image control 1207 belongs. Content with which the region is padded is the background color of the large image control 1207.

For another example, refer to FIG. 12c. The layout system recognizes a large image control 1209, and may recognize that a middle region 1210 of the large image control 1209 is in a similar pattern or a padding color. Both sides of the large image control 1209 are character images (or other images, and this is not limited in this application). In a process of stretching the large image control 1209, the layout system may stretch the middle region 1210 of the large image control 1209, and a character image region 1211 remains same.

Optionally, for an image that does not meet any of the foregoing processing conditions, for example, a middle region of the image is not similar, an edge region is padded using a non-solid color (or a gradient color), and a background color is a complex background color (namely, the non-solid color, or the gradient color), the layout system may restore and center image content in the image control, and perform Gaussian blur padding on a part other than the image content in the canvas. A Gaussian blurred graphic may be a graphic based on an edge region of image content, or based on entire image content, or may alternatively be based on any region in the image. This is not limited in this application.

In this embodiment of this application, for some controls (for example, the small image type described in the foregoing embodiments) presented in a list manner, elements in the controls are not completely displayed. Therefore, when dimensions of a screen change, more/fewer elements may be displayed based on actual screen dimensions. For example, after the foldable mobile phone is unfolded, in the embodiment shown in FIG. 10c, a "More" option 1012 may be displayed in detail. This increases an amount of information displayed on the interface.

In this embodiment of this application, special processing strategies may be set for some controls of special types, and processing manners of the controls of special types are different from the strategies of the foregoing types. The special types include but are not limited to a Web View type control and a multi-line text control. For example, a special processing strategy is optionally as follows: In the layout procedure, the layout system sets a width of a display window corresponding to the control of the special type to the width of the second display window, and the layout system does not need to stretch the control of the special type in the drawing procedure.

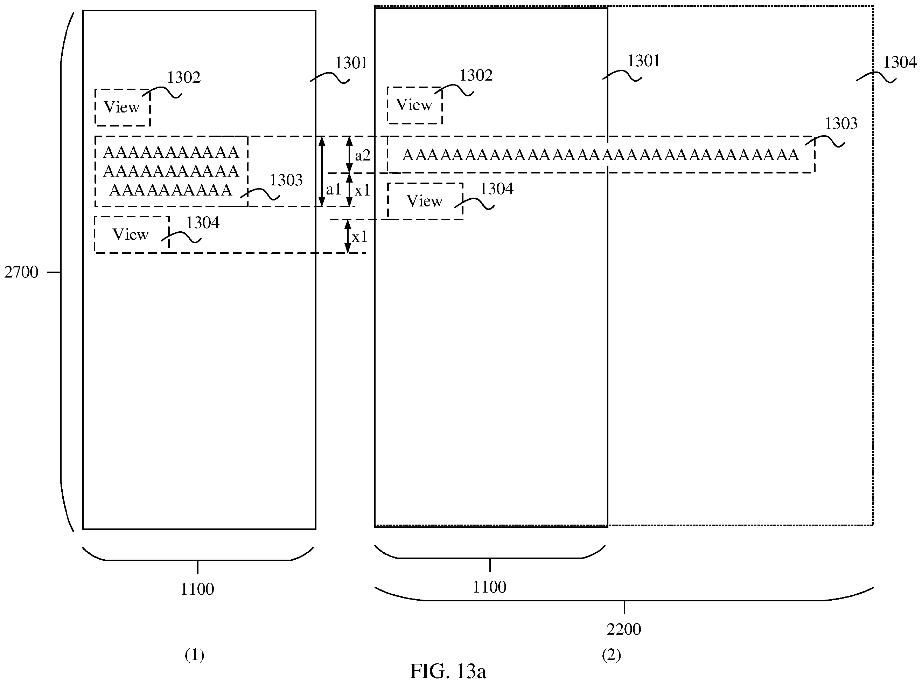

The multi-line text control is used as an example. Refer to (1) in FIG. 13a. For example, as described above, in the measure procedure, the layout system may obtain a width and a height that are corresponding to each view. For example, the layout system may obtain widths and heights of a View 1302, a View 1303, and a View 1304 in the first display window 1301. For example, the layout system may obtain that the height of the View 1303 is a1 and the width of the View 1303 is b1 (not shown in the figure).

The layout system may further obtain, in the measure procedure, that content in the View 1303 is a text, and further detect that the text is a multi-line text. As shown in (1) in FIG. 13a, the View 1303 includes three lines of text content. The text content is merely an example. This is not limited in this application.

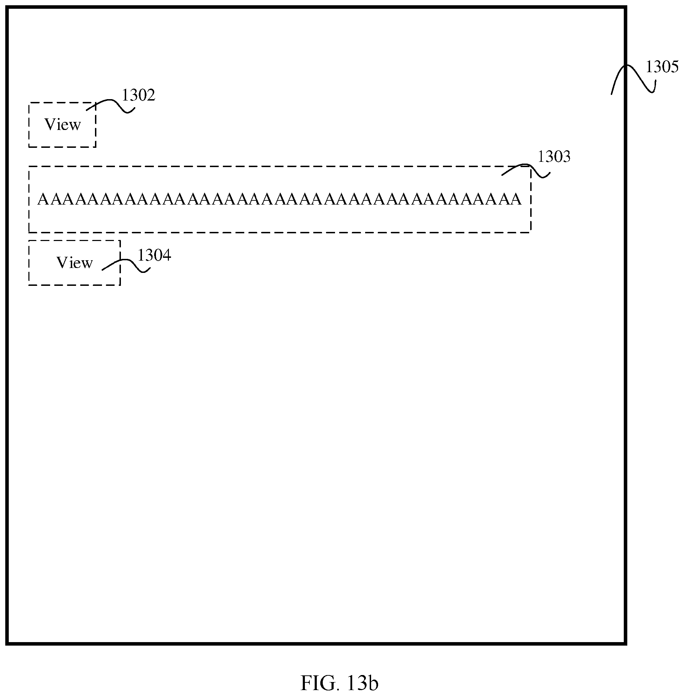

The layout system may remeasure the View 1303, and in a re-measure procedure, a display window corresponding to the View 1303 is set to the second display window 1304. As shown in (2) in FIG. 13a, after the layout system remeasures the View 1303, an obtained result is that a height of the View 1303 is a2 and a width of the View 1303 is b2 (not shown in the figure). a2 is less than a1. For example, a2 may be half of a1. This is not limited in this application, and the width b2 is greater than b1. Therefore, a quantity of lines of the multi-line text in the View 1303 may be reduced. For example, in this embodiment, after the height of the View 1303 is reduced and the width of the View 1303 is increased, three lines of text of the View 1303 may shrink, to be displayed in one line. For example, in the layout procedure, the layout system may perform layout on the nodes in the ViewTree one by one based on a measurement result. When the layout system performs layout on the View 1303, layout is performed based on the result obtained through re-measurement, and the layout procedure is the same as that described above. Details are not described herein again. In the drawing procedure, as shown in FIG. 13b, the layout system performs processing such as stretching and restoration on each node (for example, the View 1302 and the View 1304). For the View 1303, a UI corresponding to the View 1303 drawn on a second user interface 1305 by the layout system is drawn based on the result calculated in the layout procedure. In other words, the layout system performs drawing based on a location and a size that are of the View 1303 and that are obtained in the layout procedure, and does not perform processing such as stretching and restoration on the View 1303 in the drawing procedure. It should be noted that, in the layout procedure, based on a layout result of the View 1303, layout is performed on all nodes that are after the View 1303 in the ViewTree based on a traversal order. For example, refer to (1) in FIG. 13a. If the layout system performs layout based on an original measurement result, in other words, the width of the View 1303 is still a1 and the height of the View 1303 is b1, locations and sizes of the View 1302, the View 1303, and the View 1304 are shown in (1) in FIG. 13a. However, in this embodiment of this application, after measuring the View 1303, the layout system reduces the height of the View 1303 to a2, where a2 is less than a1, that is, the height is reduced by x1. As shown in (2) in FIG. 13, in the layout procedure, the layout system performs layout based on the measurement result of the View 1303, where the height is a2 and the width is b2, and obtains a location and a size of the View 1303 in a parent node of the View 1303. It should be noted that the location and the size of the View 1303 may be in a parent node of the View 1303, or may be outside or partially overlap with the parent node. This is not limited in this application. Still refer to (2) in FIG. 13a. For example, when the layout system performs layout on the View 1304, layout is performed based on the layout result of the View 1303, and a location of the View 1303 is upwardly moved in a horizontal axis direction compared with the location in (1) in FIG. 13a. An offset may optionally be a reduction amount x1 of the height of the View 1303. In this way, in this scenario, because a height of the Web View is reduced, a node at another part may be moved upward. Correspondingly, content included in a user interface generated by the layout system may be more than content displayed on a bar-type mobile phone with a same height.

Optionally, for the View 1303, when the layout system measures the View 1303, the height of the View 1303 may not be changed. For example, the height is still a1, and the width becomes b2. Other details are the same as those described above. Details are not described herein again.

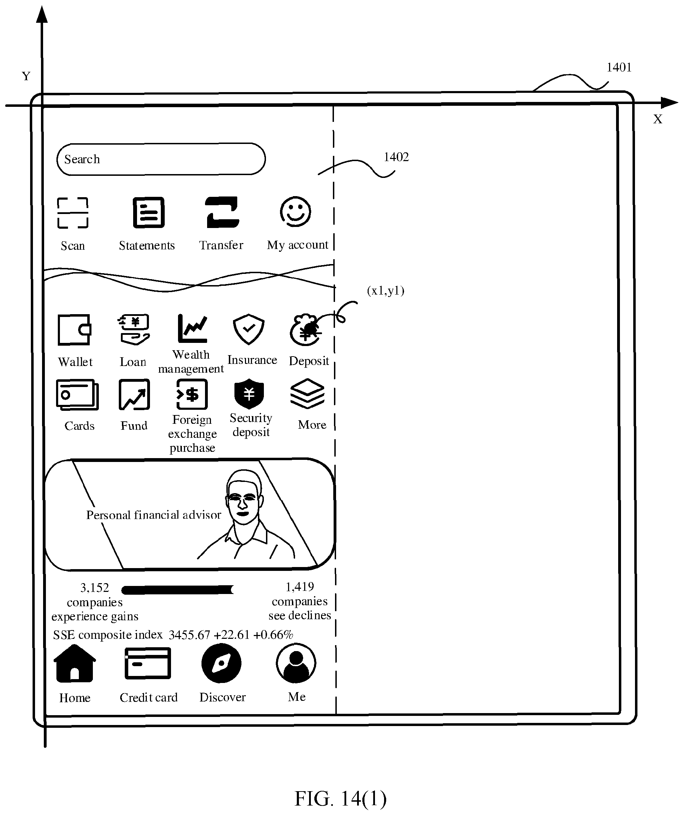

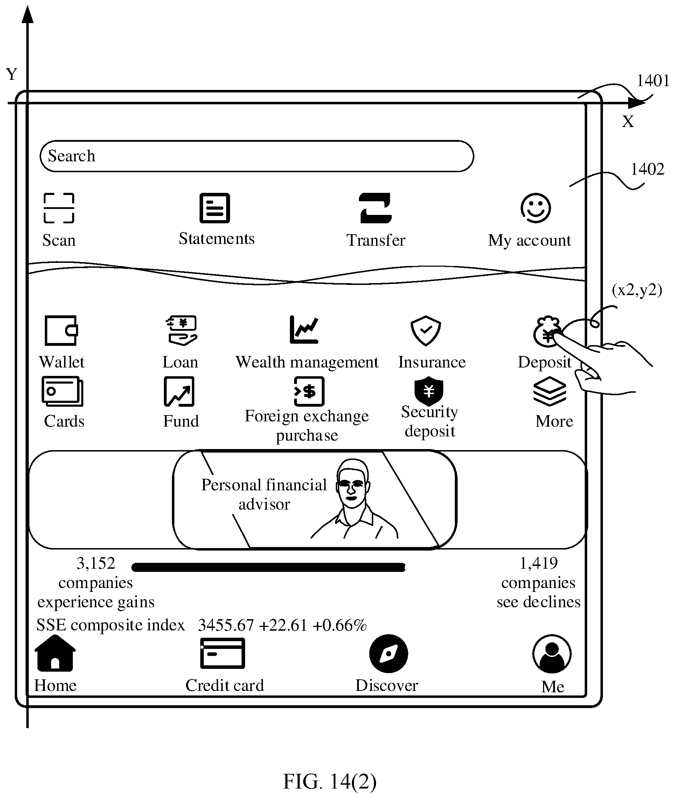

For example, as described above, the layout system performs layout based on the first display window in the layout procedure, and stretches the nodes and restores the nodes in the draw procedure to obtain the second user interface. In other words, in this embodiment of this application, only the location at which the control is displayed is changed, but the actual location of the control is not changed. Therefore, a location at which each control corresponding to each node is displayed on the second user interface is different from a location (namely, a location obtained in the layout procedure) that is of the node and that is actually obtained by the layout system. Correspondingly, in an event (the event includes a touch event, a tap event, or the like) dispatching process, the layout system obtains, based on a mapping relationship between a coordinate point in the second user interface and a coordinate point in the first display window, an actual operation location of the user. For example, refer to FIG. 14(1). As described above, after the layout system performs layout, corresponding effect of the layout system is shown in FIG. 14(1). For specific descriptions, refer to the related descriptions in FIG. 9b. Details are not described herein again. It should be noted that, FIG. 14(1) is merely a schematic example of an interface layout situation in the first display window 1402, and the layout system does not draw the diagram. Refer to FIG. 14(2). For example, the user taps a "Deposit" icon control on an inner screen 1401. In response to the received user operation, the mobile phone may determine that a coordinate point tapped by the user is (x2, y2). In this embodiment of this application, a coordinate system is established by using an upper left corner of the inner screen 1401 as a coordinate origin, a horizontal direction as an x-axis, and a vertical direction as a y-axis. The coordinate system is merely an example. This is not limited in this application. In this embodiment of this application, in a drawing procedure, a drawing system stretches a width of each node by a factor of two, and keeps a height same. Correspondingly, a mapping relationship between a coordinate point in FIG. 14(1) and a coordinate point in FIG. 14(2) is as follows: A value of an x-axis coordinate of the coordinate point in FIG. 14(1) in the coordinate system is half of a value of an x-axis coordinate of the coordinate point in FIG. 14(2) (in this embodiment of this application, only an example in which the x-axis coordinate in FIG. 14(1) is half of that in FIG. 14(2) is used as an example for description), and y-axis coordinates of the coordinate points are the same. Therefore, the mobile phone determines, based on the mapping relationship, that coordinates corresponding to the coordinate point tapped by the user are (x1, y1) in the first display window, where x1 is half of x2, and y1 is equal to y2. The mobile phone may determine, based on the coordinate point, that the user taps the "Deposit" control, and display a deposit interface.

It should be noted that, as described above, in this embodiment of this application, an example in which in the layout system, the first display window is on the left of the second display window in the layout procedure is used for description. Correspondingly, a mapping relationship between coordinates in the second display window and coordinates in the first display window is as follows: An abscissa in the second display window is half of an abscissa in the first display window. In another embodiment, if the first display window is on the right of the second display window in the layout procedure (or may be at another location, and only an example in which the first display window is on the right of the second display window is used for description, and examples are not provided one by one in this application), the abscissa in the second display window is half of the abscissa in the first display window plus an offset. The offset is a distance between the upper left corner of the first display window and the coordinate origin on the x axis.

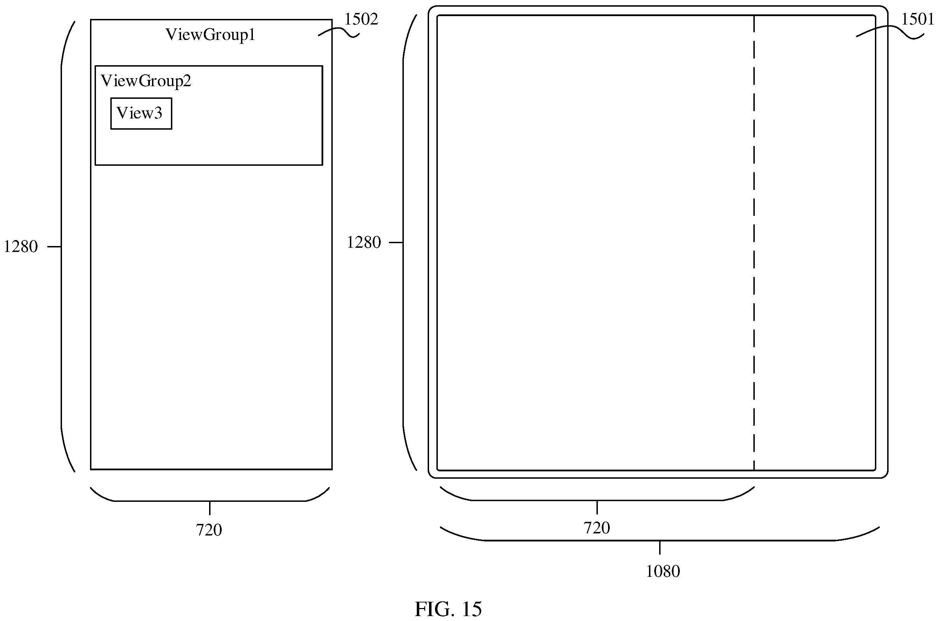

It should be noted that, in this embodiment of this application, the width of the first display window is twice that of the second display window. Correspondingly, an example in which the stretching is also performed by a factor of two in the drawing procedure is used for description. Therefore, a coordinate point in the first display window is half that of a coordinate point in the second display window (namely, the second user interface) in a horizontal axis direction. In another embodiment, in the drawing procedure, if a canvas is stretched by a factor of another value, for example, being stretched by a factor of three, the width of the second display window is three times the width of the first display window. Correspondingly, the coordinate point in the second display window (namely, the second user interface) is three times the coordinate point in the first display window in a horizontal axis direction. For example, refer to FIG. 15. A vehicle-mounted screen display scenario is used as an example for description. Dimensions of the vehicle-mounted screen 1501 are 1280* 1080 pixels. An example in which a user interface of an application is also displayed in full screen on the vehicle-mounted screen is used for description. For example, dimensions that are of a first display window 1502 and that are indicated by window information sent by a layout system to the application is 1280*720 pixels, and or may alternatively be 1280*700 pixels, or 1280*800 pixels. In this application, only an example in which the width of the first display window is two-thirds of the width of the second display window is used for description. Correspondingly, the application may perform layout and generate a ViewTree based on received window information. The layout system may perform measure and layout procedures on the ViewTree. In a drawing procedure, the layout system may stretch a width of a canvas of a root node and a width of a subordinate node of the root node to three over two times current widths (heights remains same). For example, the width of the canvases of the root node is stretched to 1080 pixels. Then, the layout system may perform restoration and alignments steps on each View. In a use process, if the user taps a point on the screen 1501, the layout system may determine, based on a proportional relationship between the first display window and the second display window, that a point that is in the first display window and to which the point in the second display window tapped by the user is mapped. For example, if a coordinate point tapped by the user on the screen 1501 is (x3, y3), the layout system may obtain that a corresponding point in the first display window is (x4, y3), where x4 is two-thirds of x3. For the part not described, refer to related content in the foregoing embodiment. Details are not described herein again.

In a possible implementation, the method provided in this embodiment of this application may be further applied to a cross-device interface projection scenario (for example, in a scenario in which a first device projects a screen to a second device). A screen size of the first device is different from that of the second device. For example, after an interface of an application A is projected from a mobile phone to a laptop, a size of a screen for displaying the interface of the application A changes (a length and a width increase), and an aspect ratio of the screen changes (increases).

In a possible implementation, a smart display option may be provided on the mobile phone in this embodiment of this application. Optionally, the smart display option may include a switch option, to enable or disable the interface display procedure in this embodiment of this application. For example, the user may tap the switch option to enable or disable the interface display procedure in this embodiment of this application. If the user disables the smart display option, the mobile phone may display a user interface on an inner screen in any manner shown in FIG. 4(1) to FIG. 4(3). Optionally, in addition to the switch option (for enabling or disabling) the smart display option may further include but is not limited to a list of applications that allow smart display. The user may set, in the list of smart display applications, an application to which the interface display procedure in this embodiment of this application is applicable. Optionally, a third-party application may set an interface configuration file, to indicate an interface to which the interface display solution in the embodiments of this application needs to be applied, and/or an interface to which the interface display solution in the embodiments of this application does not need to be applied. Optionally, the smart display option may be provided on an application, a desktop, a leftmost screen, a drop-down menu, a control center, and a sidebar. This is not limited in this application.

In another possible implementation, as described above, only a foldable screen is used as an example for describing the interface display solution in this embodiment of this application. In another embodiment, the interface display solution in this application may alternatively be applied to another device, for example, a tablet, a vehicle-mounted device, a wearable device, or a smart home device. Optionally, the interface solution in this embodiment of this application may alternatively be applied to landscape/portrait mode switching scenarios of an application and a mobile phone. For example, when the mobile phone is in a portrait state, the mobile phone may display a user interface of an application based on the solution shown in FIG. 6. When the mobile phone is switched to a landscape state, the mobile phone may display the user interface of the application based on the solution shown in FIG. 8. For specific details, refer to descriptions in FIG. 8. Details are not described herein again. Certainly, in some other embodiments, the interface solution in this embodiment of this application may alternatively be applied to scenarios such as a floating window and a split screen. This is not limited in this application.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is executed in a manner of hardware or hardware driven by computer software depends on specific applications and design constraint conditions of the technical solutions.

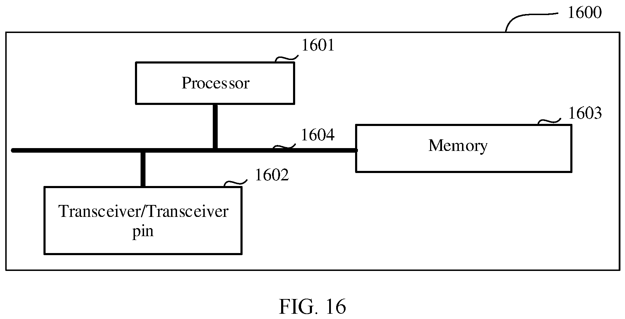

For example, FIG. 16 is a block diagram of an apparatus 1600 according to an embodiment of this application. The apparatus 1600 may include a processor 1601 and a transceiver/transceiver pin 1602, and optionally further includes a memory 1603.

Components of the apparatus 1600 are coupled together by using a bus 1604. The bus 1604 further includes a power bus, a control bus, and a status signal bus other than a data bus. However, for clear description, various buses in the figure are referred to as the bus 1604.

Optionally, the memory 1603 may be used for instructions in the foregoing method embodiment. The processor 1601 may be configured to execute instructions in the memory 1603, to control a receive pin to receive a signal, and to control a transmit pin to send a signal.

The apparatus 1600 may be the electronic device or the chip in the foregoing method embodiment.

All related content of the steps in this method embodiment may be cited in function descriptions of corresponding functional modules. Details are not described herein again.

An embodiment further provides a computer storage medium. The computer storage medium stores computer instructions. When the computer instructions are run on an electronic device, the electronic device is enabled to perform the related method steps to implement the method in the foregoing embodiment.

An embodiment further provides a computer program product. When the computer program product runs on a computer, the computer is enabled to perform the related steps to implement the method in the foregoing embodiment.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiment.

The electronic device, the computer storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or a part of the functions described above.

The term "and/or" in this specification describes only an association relationship for describing associated objects and represents that three relationships may exist. For example, A and/or B may represent the following three cases: Only A exists, both A and B exist, and only B exists.

In embodiments of this application, the word "example", "for example", or the like is used to represent giving an example, an illustration, or a description. Any embodiment or design scheme described as an "example" or with "for example" in embodiments of this application shall not be explained as being more preferred or having more advantages than other embodiments or design schemes. Exactly, use of the word "example", "for example", or the like is intended to present a related concept in a specific manner.

In the descriptions of embodiments of this application, unless otherwise stated, "a plurality of" means two or more than two. For example, a plurality of processing units are two or more processing units, and a plurality of systems are two or more systems.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. An interface display method, comprising:
obtaining, by an electronic device, a first user interface based on a first display window and a view tree of a target application, wherein a width of the first user interface is the same as a width of the first display window, a height of the first user interface is the same as a height of the first display window, the view tree comprises at least one view node, and the first user interface comprises a control corresponding to the at least one view node;
stretching, by the electronic device, the first user interface and a width of each control on the first user interface to obtain a second user interface, wherein a height of each control on the second user interface is equal to a height of each control on the first user interface;
restoring, by the electronic device, a width of at least one control on the second user interface to be the same as a width on the first user interface; and
displaying, by the electronic device, the second user interface on a second display window, wherein a width of the second user interface is equal to a width of the second display window, a height of the second user interface is equal to a height of the second display window, the height of the second display window is equal to the height of the first display window, and the width of the second display window is greater than the width of the first display window.

2. The method according to claim 1, wherein before the obtaining, by an electronic device, a first user interface based on a first display window and a view tree of a target application, the method further comprises:
obtaining, by the electronic device, the view tree generated by the target application, wherein the view tree is generated by the target application based on window information transmitted by the electronic device to the target application, and the window information indicates the width and the height of the first display window.

3. The method according to claim 1 or 2, wherein the obtaining, by an electronic device, a first user interface based on a first display window and a view tree of a target application comprises:
obtaining, by the electronic device, layout information of each of the at least one view node, wherein the layout information indicates a size and a location of each view node on the first display window; and
generating, by the electronic device, the first user interface based on the layout information of each view node.

4. The method according to claim 3, wherein the generating, by the electronic device, the first user interface based on the layout information of each view node comprises:
creating, by the electronic device, a canvas for each view node based on the layout information of each view node, and drawing, on the canvas corresponding to each view node, control content corresponding to each view node to obtain the first user interface, wherein a height of a canvas corresponding to a root view node of the view node is the height of the first user interface, and a width of the canvas corresponding to the root view node is the width of the first user interface.

5. The method according to claim 4, wherein the stretching, by the electronic device, the first user interface and a width of each control on the first user interface to obtain a second user interface comprises:
stretching, by the electronic device, a width of a canvas of the at least one view node to obtain the second user interface, wherein control content in the canvas of the at least one view node is stretched as the canvas is stretched.

6. The method according to claim 5, wherein the view tree comprises the root view node and a plurality of child view nodes, and the restoring, by the electronic device, a width of at least one control on the second user interface to be the same as a width on the first user interface comprises:
restoring, by the electronic device, a width of a canvas corresponding to at least one child view node on the second user interface to an unstretched width, wherein the at least one child view node belongs to the plurality of child view nodes.

7. The method according to claim 6, wherein the at least one child view node is of a text type and/or a small image type, the small image type indicates that the width of the canvas corresponding to the child view node is less than a preset threshold and that control content corresponding to the child view node is an image, and the text type indicates that control content in the canvas of the child view node is a text.

8. The method according to claim 5, wherein the view tree comprises a root node and a first view node, the first view node is a view node of a large image type, the large image type indicates that a width of a canvas corresponding to a child view node is greater than or equal to a preset threshold and that control content corresponding to the child view node is an image, and the restoring, by the electronic device, a width of at least one control on the second user interface to be the same as a width on the first user interface comprises:
restoring control content of the first view node to an unstretched state, wherein a width of a canvas of the first view node is a stretched width, and control content that is of the first view node and that is obtained through restoration is displayed in the middle of the canvas of the first view node; and
padding a part other than the control content in the canvas of the first view node with a target image.

9. The method according to claim 8, wherein the target image is consistent with partial content of the control content, or the target image is an image obtained by performing Gaussian blur processing on the partial content of the control content.

10. The method according to claim 1, wherein a left edge of the first display window is aligned with a left edge of the second display window, and the method further comprises:
receiving a touch operation on a control corresponding to a second view node on the second user interface, wherein the touch operation is at a first location in the second display window, a distance between the first location and the left edge of the second display window is a first distance value, and a distance between the first location and an upper edge of the second display window is a second distance value;
determining a second location to which the first location is mapped in the first display window, wherein a distance between the second location and the left edge of the first display window is a third distance value, a distance between the second location and an upper edge of the first display window is a fourth distance value, a ratio of the first distance value to the third distance value is equal to a ratio of a width of a second display interface to a width of a first display interface, and the second distance value is equal to the fourth distance value; and
determining, based on the second location, a second view node that is on the first user interface of the first display window and that corresponds to the touch operation.

11. The method according to claim 1, wherein an aspect ratio of the first display window is less than or equal to 0.5, and an aspect ratio of the second display window is greater than 0.5 and less than or equal to 1.

12. The method according to claim 1, wherein the second display window is displayed in full screen on a screen of the electronic device.

13. The method according to claim 1, wherein the target application is any third-party application on the electronic device.

14. The method according to claim 1, wherein the electronic device is an inward foldable mobile phone, an outward foldable mobile phone, a vehicle-mounted device, a wearable device, and/or a television.

15. An electronic device, comprising one or more memories, a foldable display, and one or more processors, wherein the one or more memories are coupled to the one or more processors, the one or more memories are configured to store computer program code, the program code comprises computer instructions, and when the one or more processors execute the computer instructions, the electronic device is enabled to perform the method according to any one of claims 1 to 14.

16. A computer storage medium, comprising computer instructions, wherein when the computer instructions are run on an electronic device, the electronic device is enabled to perform the method according to any one of claims 1 to 14.

17. A computer program product, wherein when the computer program product runs on a computer, the computer is enabled to perform the method according to any one of claims 1 to 14.

18. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform the method according to any one of claims 1 to 14.
